# EUROPEAN PATENT APPLICATION

(11) **EP 4 510 483 A1**
(43) Date of publication of application: **19.02.2025**
(21) Application number: 22936842.8
(22) Date of filing: 12.04.2022
(51) Int. Cl.: H04L 1/18, H04W 72/04

(54) **INFORMATION TRANSMISSION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2022/086463
(87) International publication number: WO 2023/197188

(57) **Abstract**

An information transmission method and apparatus, and a communication device and a storage medium. The method comprises: a base station receiving bandwidth capability information, which is reported by a reduced capability user equipment (UE) of a first type, wherein the bandwidth capability information is at least used for indicating a first bandwidth processing capability of the reduced capability UE of the first type, the first bandwidth processing capability is less than or equal to a first bandwidth threshold value, the first bandwidth threshold value is less than a second bandwidth threshold value, which a reduced capability UE of a second type can support, and the first bandwidth processing capability is used for determining the maximum bandwidth that the reduced capability UE of the first type can allocate to a data channel.

## Description

### TECHNICAL FIELD

The present disclosure relates to, but is not limited to, the field of wireless communication technologies, in particular to an information transmission method and apparatus, and a communication device and a storage medium.

### BACKGROUND

**A** reduced capability user equipment (referred to as a NR-lite or Redcap UE) has been designed in the new radio (NR) to cover the requirements of a mid-range Internet of Things (IoT) device. This type of device is similar to an IoT device in long term evolution (LTE) technology, and a 5th generation (5G)-based NR-lite typically needs to meet the following requirements: low cost and complexity; a certain degree of coverage enhancement; power saving; and some terminals with one receiving antenna (1RX), some terminals with two receiving antennas (2RX).

### SUMMARY

In view of this, embodiments of the present disclosure provide an information transmission method and apparatus, and a communication device and a storage medium.

According to a first aspect of the embodiments of the present disclosure, there is provided an information transmission method, performed by a base station, and including: receiving bandwidth capability information reported by a first type of reduced capability user equipment (UE), where the bandwidth capability information is configured to indicate at least a first bandwidth processing capability of the first type of reduced capability UE, the first bandwidth processing capability is less than or equal to a first bandwidth threshold, the first bandwidth threshold is less than a second bandwidth threshold supported by a second type of reduced capability UE, and the first bandwidth processing capability is configured to determine a maximum bandwidth allocated, by the first type of reduced capability UE, to a data channel.

In an embodiment, the bandwidth capability information is further configured to indicate a second bandwidth processing capability of the first type of reduced capability UE, the second bandwidth processing capability is less than or equal to a third bandwidth threshold, and the second bandwidth processing capability is configured to determine a maximum bandwidth received and/or transmitted by the first type of reduced capability UE.

**In** an embodiment, the bandwidth capability information is further configured to indicate at least one of: a third bandwidth processing capability of the first type of reduced capability UE, a fourth bandwidth processing capability of the first type of reduced capability UE, or a fifth bandwidth processing capability of the first type of reduced capability UE.

The third bandwidth processing capability is less than or equal to the first bandwidth threshold, or the third bandwidth processing capability is greater than the first bandwidth threshold and less than or equal to a third bandwidth threshold; and the third bandwidth processing capability is configured to determine a maximum bandwidth allocated, by the first type of reduced capability UE, to a control channel.

The fourth bandwidth processing capability is less than or equal to the first bandwidth threshold, or the fourth bandwidth processing capability is greater than the first bandwidth threshold and less than or equal to the third bandwidth threshold; and the fourth bandwidth processing capability is configured to determine a maximum bandwidth allocated, by the first type of reduced capability UE, to a reference signal.

The fifth bandwidth processing capability is less than or equal to the first bandwidth threshold, or the fifth bandwidth processing capability is greater than the first bandwidth threshold and less than or equal to the third bandwidth threshold; and the fifth bandwidth processing capability is configured to determine a maximum bandwidth allocated, by the first type of reduced capability UE, to a synchronization signal and physical broadcast channel (PBCH) block (SSB).

In an embodiment, the third bandwidth threshold is greater than or equal to the first bandwidth threshold.

In an embodiment, the third bandwidth threshold is equal to or less than the second bandwidth threshold.

In an embodiment, the method further includes: configuring, based on the bandwidth capability information, a transmission resource for the first type of reduced capability UE; and transmitting to the first type of reduced capability UE resource configuration information indicating the transmission resource.

In an embodiment, the resource configuration information is configured to indicate at least one of: a frequency spectrum resource of the data channel, a frequency spectrum resource of a control channel, a frequency spectrum resource of a reference signal, or a frequency spectrum resource of a synchronization signal and physical broadcast channel (PBCH) block (SSB).

A maximum bandwidth of the frequency spectrum resource of the data channel is less than or equal to the first bandwidth threshold.

**A** maximum bandwidth of the frequency spectrum resource of the control channel is less than or equal to the first bandwidth threshold, or the maximum bandwidth of the frequency spectrum resource of the control channel is greater than the first bandwidth threshold and less than or equal to a third bandwidth threshold.

**A** maximum bandwidth of the frequency spectrum resource of the reference signal is less than or equal to the first bandwidth threshold, or the maximum bandwidth of the frequency spectrum resource of the reference signal is greater than the first bandwidth threshold and less than or equal to the third bandwidth threshold.

A maximum bandwidth of the frequency spectrum resource of the SSB is less than or equal to the first bandwidth threshold, or the maximum bandwidth of the frequency spectrum resource of the SSB is greater than the first bandwidth threshold and less than or equal to the third bandwidth threshold.

**In** an embodiment, at least one of: the frequency spectrum resource of the data channel, the frequency spectrum resource of the control channel, the frequency spectrum resource of the reference signal, or the frequency spectrum resource of the SSB, as indicated by the resource configuration information, occupies a span of bandwidth in a frequency domain at the same moment that is less than or equal to the third bandwidth threshold.

**In** an embodiment, the resource configuration information is configured to indicate a bandwidth part (BWP) configured to the first type of reduced capability UE, and the BWP has a bandwidth less than or equal to a third bandwidth threshold.

According to a second aspect of the embodiments of the present disclosure, there is provided an information transmission method, performed by a first type of reduced capability user equipment (UE), and including: reporting bandwidth capability information to a base station, where the bandwidth capability information is configured to indicate at least a first bandwidth processing capability of the first type of reduced capability UE, the first bandwidth processing capability is less than or equal to a first bandwidth threshold, the first bandwidth threshold is less than a second bandwidth threshold supported by a second type of reduced capability UE, and the first bandwidth processing capability is configured to determine a maximum bandwidth allocated, by the first type of reduced capability UE, to a data channel.

In an embodiment, the bandwidth capability information is further configured to indicate a second bandwidth processing capability of the first type of reduced capability UE, and the second bandwidth processing capability is less than or equal to a third bandwidth threshold, and the second bandwidth processing capability is configured to determine a maximum bandwidth received and/or transmitted by the first type of reduced capability UE.

In an embodiment, the bandwidth capability information is further configured to indicate at least one of: a third bandwidth processing capability of the first type of reduced capability UE, a fourth bandwidth processing capability of the first type of reduced capability UE, or a fifth bandwidth processing capability of the first type of reduced capability UE.

The third bandwidth processing capability is less than or equal to the first bandwidth threshold, or the third bandwidth processing capability is greater than the first bandwidth threshold and less than or equal to a third bandwidth threshold; and the third bandwidth processing capability is configured to determine a maximum bandwidth allocated, by the first type of reduced capability UE, to a control channel.

The fourth bandwidth processing capability is less than or equal to the first bandwidth threshold, or the fourth bandwidth processing capability is greater than the first bandwidth threshold and less than or equal to the third bandwidth threshold; and the fourth bandwidth processing capability is configured to determine a maximum bandwidth allocated, by the first type of reduced capability UE, to a reference signal.

The fifth bandwidth processing capability is less than or equal to the first bandwidth threshold, or the fifth bandwidth processing capability is greater than the first bandwidth threshold and less than or equal to the third bandwidth threshold; and the fifth bandwidth processing capability is configured to determine a maximum bandwidth allocated, by the first type of reduced capability UE, to a synchronization signal and physical broadcast channel (PBCH) block (SSB).

In an embodiment, the third bandwidth threshold is greater than or equal to the first bandwidth threshold.

In an embodiment, the third bandwidth threshold is equal to or less than the second bandwidth threshold.

In an embodiment, the method further includes: receiving resource configuration information from the base station, where the resource configuration information is configured to indicate a transmission resource for the first type of reduced capability UE, and the resource configuration information is determined by the base station based on the bandwidth capability information; and/or obtaining predefined resource configuration information.

In an embodiment, the resource configuration information is configured to indicate at least one of: a frequency spectrum resource of the data channel, a frequency spectrum resource of a control channel, a frequency spectrum resource of a reference signal, or a frequency spectrum resource of a synchronization signal and physical broadcast channel (PBCH) block (SSB).

A maximum bandwidth of the frequency spectrum resource of the data channel is less than or equal to the first bandwidth threshold.

A maximum bandwidth of the frequency spectrum resource of the control channel is less than or equal to the first bandwidth threshold, or the maximum bandwidth of the frequency spectrum resource of the control channel is greater than the first bandwidth threshold and less than or equal to a third bandwidth threshold.

A maximum bandwidth of the frequency spectrum resource of the reference signal is less than or equal to the first bandwidth threshold, or the maximum bandwidth of the frequency spectrum resource of the reference signal is greater than the first bandwidth threshold and less than or equal to the third bandwidth threshold.

A maximum bandwidth of the frequency spectrum resource of the SSB is less than or equal to the first bandwidth threshold, or the maximum bandwidth of the frequency spectrum resource of the SSB is greater than the first bandwidth threshold and less than or equal to the third bandwidth threshold.

In an embodiment, at least one of: the frequency spectrum resource of the data channel, the frequency spectrum resource of the control channel, the frequency spectrum resource of the reference signal, or the frequency spectrum resource of the SSB, as indicated by the resource configuration information, occupies a span of bandwidth in a frequency domain at the same moment that is less than or equal to the third bandwidth threshold.

In an embodiment, the resource configuration information is configured to indicate a bandwidth part (BWP) configured to the first type of reduced capability UE, and the BWP has a bandwidth less than or equal to a third bandwidth threshold.

According to a third aspect of the embodiments of the present disclosure, there is provided an information transmission apparatus, including: a first transmitting and receiving module, configured to receive bandwidth capability information reported by a first type of reduced capability user equipment (UE), where the bandwidth capability information is configured to indicate at least a first bandwidth processing capability of the first type of reduced capability UE, the first bandwidth processing capability is less than or equal to a first bandwidth threshold, the first bandwidth threshold is less than a second bandwidth threshold supported by a second type of reduced capability UE, and the first bandwidth processing capability is configured to determine a maximum bandwidth allocated, by the first type of reduced capability UE, to a data channel.

In an embodiment, the bandwidth capability information is further configured to indicate a second bandwidth processing capability of the first type of reduced capability UE, the second bandwidth processing capability is less than or equal to a third bandwidth threshold, and the second bandwidth processing capability is configured to determine a maximum bandwidth received and/or transmitted by the first type of reduced capability UE.

In an embodiment, the bandwidth capability information is further configured to indicate at least one of: a third bandwidth processing capability of the first type of reduced capability UE, a fourth bandwidth processing capability of the first type of reduced capability UE, or a fifth bandwidth processing capability of the first type of reduced capability UE.

The third bandwidth processing capability is less than or equal to the first bandwidth threshold, or the third bandwidth processing capability is greater than the first bandwidth threshold and less than or equal to a third bandwidth threshold; and the third bandwidth processing capability is configured to determine a maximum bandwidth allocated, by the first type of reduced capability UE, to a control channel.

The fourth bandwidth processing capability is less than or equal to the first bandwidth threshold, or the fourth bandwidth processing capability is greater than the first bandwidth threshold and less than or equal to the third bandwidth threshold; and the fourth bandwidth processing capability is configured to determine a maximum bandwidth allocated, by the first type of reduced capability UE, to a reference signal.

The fifth bandwidth processing capability is less than or equal to the first bandwidth threshold, or the fifth bandwidth processing capability is greater than the first bandwidth threshold and less than or equal to the third bandwidth threshold; and the fifth bandwidth processing capability is configured to determine a maximum bandwidth allocated, by the first type of reduced capability UE, to a synchronization signal and physical broadcast channel (PBCH) block (SSB).

In an embodiment, the third bandwidth threshold is greater than or equal to the first bandwidth threshold.

In an embodiment, the third bandwidth threshold is equal to or less than the second bandwidth threshold.

In an embodiment, the apparatus further includes: a processing module, configured to configure, based on the bandwidth capability information, a transmission resource for the first type of reduced capability UE; where the first receiving module is further configured to transmit to the first type of reduced capability UE resource configuration information indicating the transmission resource.

In an embodiment, the resource configuration information is configured to indicate at least one of: a frequency spectrum resource of the data channel, a frequency spectrum resource of a control channel, a frequency spectrum resource of a reference signal, or a frequency spectrum resource of a synchronization signal and physical broadcast channel (PBCH) block (SSB).

A maximum bandwidth of the frequency spectrum resource of the data channel is less than or equal to the first bandwidth threshold.

A maximum bandwidth of the frequency spectrum resource of the control channel is less than or equal to the first bandwidth threshold, or the maximum bandwidth of the frequency spectrum resource of the control channel is greater than the first bandwidth threshold and less than or equal to a third bandwidth threshold.

A maximum bandwidth of the frequency spectrum resource of the reference signal is less than or equal to the first bandwidth threshold, or the maximum bandwidth of the frequency spectrum resource of the reference signal is greater than the first bandwidth threshold and less than or equal to the third bandwidth threshold.

A maximum bandwidth of the frequency spectrum resource of the SSB is less than or equal to the first bandwidth threshold, or the maximum bandwidth of the frequency spectrum resource of the SSB is greater than the first bandwidth threshold and less than or equal to the third bandwidth threshold.

In an embodiment, at least one of: the frequency spectrum resource of the data channel, the frequency spectrum resource of the control channel, the frequency spectrum resource of the reference signal, or the frequency spectrum resource of the SSB, as indicated by the resource configuration information, occupies a span of bandwidth in a frequency domain at the same moment that is less than or equal to the third bandwidth threshold.

In an embodiment, the resource configuration information is configured to indicate a bandwidth part (BWP) configured to the first type of reduced capability UE, and the BWP has a bandwidth less than or equal to a third bandwidth threshold.

According to a fourth aspect of the embodiments of the present disclosure, there is provided an information transmission apparatus, including: a second transmitting and receiving module, configured to report bandwidth capability information to a base station, where the bandwidth capability information is configured to indicate at least a first bandwidth processing capability of the first type of reduced capability UE, the first bandwidth processing capability is less than or equal to a first bandwidth threshold, the first bandwidth threshold is less than a second bandwidth threshold supported by a second type of reduced capability UE, and the first bandwidth processing capability is configured to determine a maximum bandwidth allocated, by the first type of reduced capability UE, to a data channel.

In an embodiment, the bandwidth capability information is further configured to indicate a second bandwidth processing capability of the first type of reduced capability UE, the second bandwidth processing capability is less than or equal to a third bandwidth threshold, and the second bandwidth processing capability is configured to determine a maximum bandwidth received and/or transmitted by the first type of reduced capability UE.

In an embodiment, the bandwidth capability information is further configured to indicate at least one of: a third bandwidth processing capability of the first type of reduced capability UE, a fourth bandwidth processing capability of the first type of reduced capability UE, or a fifth bandwidth processing capability of the first type of reduced capability UE.

The third bandwidth processing capability is less than or equal to the first bandwidth threshold, or the third bandwidth processing capability is greater than the first bandwidth threshold and less than or equal to a third bandwidth threshold; and the third bandwidth processing capability is configured to determine a maximum bandwidth allocated, by the first type of reduced capability UE, to a control channel.

The fourth bandwidth processing capability is less than or equal to the first bandwidth threshold, or the fourth bandwidth processing capability is greater than the first bandwidth threshold and less than or equal to the third bandwidth threshold; and the fourth bandwidth processing capability is configured to determine a maximum bandwidth allocated, by the first type of reduced capability UE, to a reference signal.

The fifth bandwidth processing capability is less than or equal to the first bandwidth threshold, or the fifth bandwidth processing capability is greater than the first bandwidth threshold and less than or equal to the third bandwidth threshold; and the fifth bandwidth processing capability is configured to determine a maximum bandwidth allocated, by the first type of reduced capability UE, to a synchronization signal and physical broadcast channel (PBCH) block (SSB).

In an embodiment, the third bandwidth threshold is greater than or equal to the first bandwidth threshold.

In an embodiment, the third bandwidth threshold is equal to or less than the second bandwidth threshold.

In an embodiment, the second transmitting and receiving module is further configured to receive resource configuration information from the base station, where the resource configuration information is configured to indicate a transmission resource for the first type of reduced capability UE, and the resource configuration information is determined by the base station based on the bandwidth capability information; and/or the second transmitting and receiving module is further configured to obtain predefined resource configuration information.

In an embodiment, the resource configuration information is configured to indicate at least one of: a frequency spectrum resource of the data channel, a frequency spectrum resource of a control channel, a frequency spectrum resource of a reference signal, or a frequency spectrum resource of a synchronization signal and physical broadcast channel (PBCH) block (SSB).

A maximum bandwidth of the frequency spectrum resource of the data channel is less than or equal to the first bandwidth threshold.

A maximum bandwidth of the frequency spectrum resource of the control channel is less than or equal to the first bandwidth threshold, or the maximum bandwidth of the frequency spectrum resource of the control channel is greater than the first bandwidth threshold and less than or equal to a third bandwidth threshold.

A maximum bandwidth of the frequency spectrum resource of the reference signal is less than or equal to the first bandwidth threshold, or the maximum bandwidth of the frequency spectrum resource of the reference signal is greater than the first bandwidth threshold and less than or equal to the third bandwidth threshold.

A maximum bandwidth of the frequency spectrum resource of the SSB is less than or equal to the first bandwidth threshold, or the maximum bandwidth of the frequency spectrum resource of the SSB is greater than the first bandwidth threshold and less than or equal to the third bandwidth threshold.

In an embodiment, at least one of: the frequency spectrum resource of the data channel, the frequency spectrum resource of the control channel, the frequency spectrum resource of the reference signal, or the frequency spectrum resource of the SSB, as indicated by the resource configuration information, occupies a span of bandwidth in a frequency domain at the same moment that is less than or equal to the third bandwidth threshold.

In an embodiment, the resource configuration information is configured to indicate a bandwidth part (BWP) configured to the first type of reduced capability UE, and the BWP has a bandwidth less than or equal to a third bandwidth threshold.

According to a fifth aspect of the embodiments of the present disclosure, there is provided a communication device, including: a processor; and a memory storing programs executable by the processor, where the programs, when executed by the processor, cause the processor to perform the information transmission method of the first or second aspect.

According to a sixth aspect of the embodiments of the present disclosure, there is provided a computer-readable storage medium, storing executable programs thereon, where the executable programs, when executed by a processor, cause the processor to perform the information transmission method of the first or second aspect.

The embodiments of the present disclosure provide an information transmission method and apparatus, and a communication device and a storage medium. The base station receives bandwidth capability information reported by a first type of reduced capability UE, where the bandwidth capability information is configured to indicate at least a first bandwidth processing capability of the first type of reduced capability UE, the first bandwidth processing capability is less than or equal to a first bandwidth threshold, the first bandwidth threshold is less than a second bandwidth threshold supported by a second type of reduced capability UE, and the first bandwidth processing capability is configured to determine a maximum bandwidth allocated, by the first type of reduced capability UE, to a data channel. In this way, the first type of reduced capability UE indicates its first bandwidth processing capability to the base station through the bandwidth capability information, and the base station configures the data channel resource for the first type of reduced capability UE. Therefore, the first type of reduced capability UE can perform service data processing with relatively small bandwidth processing capability compared with other types of UE, thus reducing workload and further saving power.

It is to be understood that the above general descriptions and the below detailed descriptions are merely exemplary and explanatory, and are not intended to limit the present disclosure.

### BRIEF DESCRIPTION OF THE DRAWINGS

The accompanying drawings herein, which are incorporated in and constitute a part of the present description, illustrate examples consistent with the present disclosure and serve to explain the principles of the present disclosure together with the description.
FIG. 1 is a schematic structural diagram illustrating a wireless communication system according to an embodiment of the present disclosure.
**FIG.** 2 is a flowchart illustrating an information transmission method according to an embodiment of the present disclosure.
FIG. 3 is a flowchart illustrating an information transmission method according to another embodiment of the present disclosure.
FIG. 4 is a schematic diagram illustrating a frequency domain resource configuration according to an embodiment of the present disclosure.
FIG. 5 is a schematic diagram illustrating a frequency domain resource configuration according to another embodiment of the present disclosure.
FIG. 6 is a schematic diagram illustrating a frequency domain resource configuration according to yet another embodiment of the present disclosure.
FIG. 7 is a flowchart illustrating an information transmission method according to yet another embodiment of the present disclosure.
FIG. 8 is a flowchart illustrating an information transmission method according to still another embodiment of the present disclosure.
FIG. 9 is a block diagram illustrating an information transmission apparatus according to an embodiment of the present disclosure.
FIG. 10 is a block diagram illustrating an information transmission apparatus according to another embodiment of the present disclosure.
FIG. 11 is a block diagram illustrating a device for transmitting information transmission according to an embodiment of the present disclosure.

### DETAILED DESCRIPTION OF THE EMBODIMENTS

Examples will be described in detail herein, with the illustrations thereof represented in the drawings. Where the following description relates to the drawings, unless otherwise indicated, the same numerals in different drawings represent the same or similar elements. Implementations described in the following examples do not represent all implementations consistent with the present disclosure. On the contrary, they are examples of an apparatus and a method consistent with some aspects of the present disclosure described in detail in the appended claims.

The terms used in the present disclosure are for the purpose of describing a particular example only, and are not intended to limit the present disclosure. The singular forms such as "a," "said," and "the" used in the present disclosure and the appended claims are also intended to include multiple, unless the context clearly indicates otherwise. It will also be understood that as used herein, the term "and/or" is and includes any or all combinations of one or more of the associated listed items.

It is to be understood that although different information may be described using the terms such as "first," "second," "third," etc. in the present disclosure, the information should not be limited to these terms. These terms are used only to distinguish the same type of information from each other. For example, the first information may also be referred to as the second information without departing from the scope of the present disclosure, and similarly, the second information may also be referred to as the first information. Depending on the context, as used herein, the wording "if' may be interpreted as "while ..." or "when ..." or "in response to a determination".

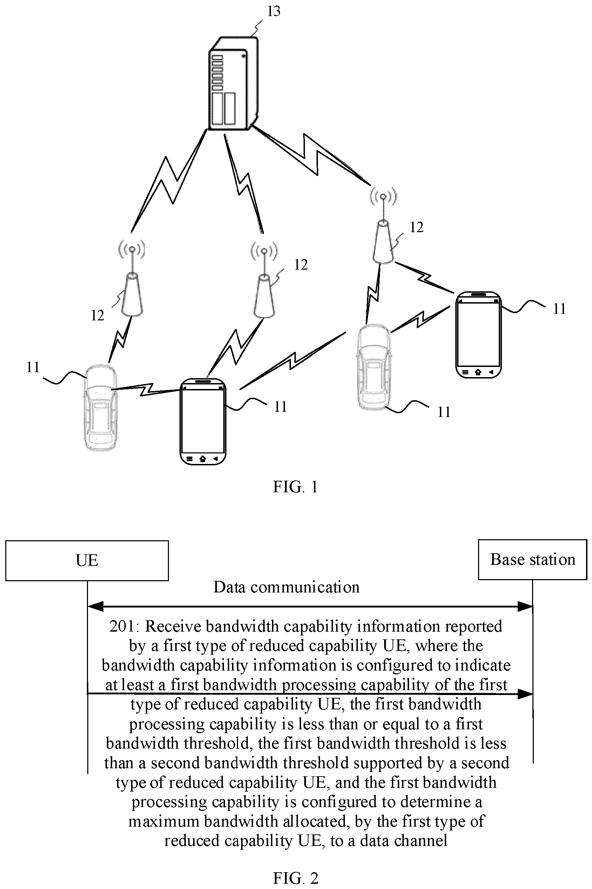

FIG. 1 is a schematic structural diagram illustrating a wireless communication system according to an embodiment of the present disclosure. As shown in FIG. 1, the wireless communication system is a communication system based on the cellular mobile communication technology, which may include a plurality of terminals 11 and a plurality of base stations 12.

The terminal 11 may be a device that provides voice and/or data connectivity to users. The terminal 11 can communicate with one or more core networks via a radio access network (RAN). The terminal 11 can be an IoT terminal, such as a sensor device, a mobile phone (or a "cellular" phone) and a computer with an IoT terminal. For example, it can be a fixed, portable, pocket-sized, handheld, computer-built or on-board device. For example, a station (STA), a subscriber unit, a subscriber station, a mobile station, a remote station, an access point, a remote terminal, an access terminal, a user terminal, a user agent, a user device or a user equipment (UE). Alternatively, the terminal 11 may be a device of an unmanned aerial vehicle. Alternatively, the terminal 11 may also be an on-board device, for example, a driving computer with wireless communication function, or a wireless communication device externally connected to the driving computer. Alternatively, the terminal 11 may also be a roadside device, such as a street lamp, a signal lamp or other roadside device with wireless communication function.

The base station 12 may be a network device in a wireless communication system. The wireless communication system can be the 4th (4G) generation mobile communication system, also known as long term evolution (LTE) system. Alternatively, the wireless communication system can also be a 5G system, also known as a new radio (NR) system or a 5G NR system. Alternatively, the wireless communication system can also be a next generation system of the 5G system. The access network in the 5G system can be called a new generation-radio access network (NG-RAN). Or, a machine type communication (MTC) system.

The base station 12 may be an evolved node B (eNB) adopted in the 4G system. Alternatively, the base station 12 may also be a g-node-B (gNB) adopting a centralized and distributed architecture in the 5G system. When the base station 12 adopts a centralized and distributed architecture, the base station 12 usually includes a central unit (CU) and at least two distributed units (DUs). The centralized unit is provided with a protocol stack of packet data convergence protocol (PDCP) layer, radio link control (RLC) layer and media access control (MAC) layer. The distributed unit is provided with a physical (PHY) layer protocol stack. The embodiments of the present disclosure do not limit the specific implementation of the base station 12.

A wireless connection can be established between the base station 12 and the terminal 11 through a wireless air interface. In different embodiments, the wireless air interface is based on the fourth generation (4G) mobile communication network technology standard. Alternatively, the wireless air interface is based on the fifth generation (5G) mobile communication network technology standard, for example, the wireless air interface is a new radio. Alternatively, the wireless air interface can also be a wireless air interface based on the technical standard of the next generation mobile communication network of 5G.

In some embodiments, end to end (E2E) connections can also be established between the terminals 11, for example, vehicle to vehicle (V2V) communication, vehicle to Infrastructure (V2I) communication and vehicle to pedestrian (V2P) communication in vehicle to everything (V2X) communication.

In some embodiments, the wireless communication system may further include a network management device 13.

A plurality of base stations 12 are respectively connected with a network management device 13. The network management device 13 may be a core network device in a wireless communication system. For example, the network management device 13 may be a mobility management entity (MME) in an evolved packet core (EPC). Alternatively, the network management device can also be other core network devices, such as serving gateway (SGW), public data network gateway (PGW), policy and charging rules function (PCRF) or home subscriber server (HSS). The embodiment of the present disclosure does not limit the implementation form of the network management device 13.

The reduced capability (RedCap) UE introduced in 3rd generation partnership project (3GPP) Release 17 (R17) is mainly aimed at medium-speed applications, and the bandwidth of the RedCap UE under FR1 is up to 20MHz. In the related art, the applicable bandwidth of the RedCap UE is further reduced. A RedCAP UE that further reduces the bandwidth used is called an enhanced RedCap UE.

Therefore, how to allocate resources for the enhanced Redcap UE with narrow bandwidth and realize data communication with a network device is an urgent problem to be solved.

As shown in FIG. 2, the embodiment of the present disclosure provides an information transmission method that can be performed by a base station of a cellular mobile communication system, and the method includes the following step 201.

At step 201, bandwidth capability information reported by a first type of reduced capability UE is received, where the bandwidth capability information is configured to indicate at least a first bandwidth processing capability of the first type of reduced capability UE, the first bandwidth processing capability is less than or equal to a first bandwidth threshold, the first bandwidth threshold is less than a second bandwidth threshold supported by a second type of reduced capability UE, and the first bandwidth processing capability is configured to determine a maximum bandwidth allocated, by the first type of reduced capability UE, to a data channel.

In all embodiments of the present disclosure, the first type of reduced capability UE may report the type of the first type of the first type of reduced capability UE through the bandwidth capability information, so that the base station side can know the first bandwidth processing capability of the first type of reduced capability UE and/or the first bandwidth threshold.

The first type of reduced capability UE may be an enhanced RedCap UE, and the enhanced RedCap UE can be called an eRedCap UE.

The second type of reduced capability UE may be a RedCap UE in 3GPP Release 17(R17). A bandwidth processing capability of a radio frequency (RF) transceiver and baseband processing module for the second type of reduced capability UE in the FR1 (Sub-6GHz) frequency band is 20MHz. In a possible implementation, a maximum bandwidth which the second type of reduced capability UE can support is 20MHz.

The first type of reduced capability UE may have a lower baseband processing bandwidth and/or a RF processing bandwidth than the second type of reduced capability UE. In this way, the first type of reduced capability UE can save resources and power compared with the second type of reduced capability UE in data communication. In a possible implementation, a bandwidth processing capability (maximum bandwidth) which the second type of reduced capability UE can support is 5MHz.

The first type of reduced capability UE can transmit the bandwidth capability information to the base station during and/or after accessing the base station. The second type of reduced capability UE can transmit the bandwidth capability information to the base station during and/or after accessing the base station.

The maximum bandwidth that can be allocated to the data channel by the first type of reduced capability UE may include, but is not limited to, the maximum bandwidth that can be allocated to the data channel by the baseband of the first type of reduced capability UE.

The maximum bandwidth that can be allocated to the data channel by the first type of reduced capability UE may include, but is not limited to, the maximum bandwidth that can be allocated to the data channel by the first type of reduced capability UE. Herein, the data channel may include, but is not limited to, a service data channel. The data channel can be used to transmit communication service data. Illustratively, the data channel may include, but is not limited to, a physical downlink shared channel (PDSCH) and/or a physical uplink shared channel (PDSCH).

The maximum bandwidth that the first type of reduced capability UE can allocate to the data channel can be equal to or less than the first bandwidth processing capability. Alternatively, the maximum bandwidth that the first type of reduced capability UE can allocate to the data channel is less than or equal to the first bandwidth threshold. The first bandwidth processing capability may be less than or equal to the first bandwidth threshold.

In an embodiment, the first bandwidth threshold is 5 MHz and the second bandwidth threshold is 20 MHz. For example, the bandwidth capability information may be used to indicate a first bandwidth processing capability of the first type of reduced capability UE; where the first bandwidth processing capability is less than or equal to 5 MHz.

In all embodiments of the present disclosure, the bandwidth capability information may be the bandwidth value itself, a parameter for identifying the bandwidth value, or a parameter that can determine the bandwidth value according to a preset method, which is not limited in the embodiments of the present disclosure. This is not described in the embodiments of the present disclosure.

For example, the first bandwidth processing capability may be specified by a communication protocol. For example, the communication protocol may specify that the first bandwidth processing capability of the first type of first type of reduced capability UE is 5MHz. That is, the maximum bandwidth that the first type of reduced capability UE can allocate to the data channel is less than or equal to 5MHz.

The first bandwidth processing capability can be specified by the communication protocol, reported by the UE to the base station, determined by the base station and transmitted to the UE, or agreed by the base station and the UE. For example, the bandwidth capability information transmitted by the first type of reduced capability UE may include an identifier or indicator for indicating the type of that first type of reduced capability UE to allow the network device to determine that the UE transmitting the bandwidth capability information is a first type of reduced capability UE. In a possible implementation, when the network device determines that the UE is the first type of reduced capability UE through the bandwidth capability information transmitted by the UE, the first bandwidth processing capability of the first type of reduced capability UE can be correspondingly determined.

The maximum bandwidth that the first type of reduced capability UE can allocate to the data channel may include, but is not limited to, a bandwidth on which a signal transmission path of a baseband can transmit data, and/or a bandwidth on which a signal processing component (such as a baseband processor) of a baseband can process data.

The base station can allocate resources for the first type of reduced capability UE based on the bandwidth capability information reported by the first type of reduced capability UE. The bandwidth of the data channel resource configured by the base station for the first type of reduced capability UE may be less than or equal to the first bandwidth processing capability.

**In** this way, the first type of reduced capability UE indicates the first bandwidth processing capability of the first type of reduced capability UE to the base station through the bandwidth capability information, and the base station configures the data channel resource for the first type of reduced capability UE. Therefore, the first type of reduced capability UE can perform service data processing with relatively small bandwidth processing capability compared with other types of UE, thus reducing workload and further saving power.

In an embodiment, the bandwidth capability information is further configured to indicate a second bandwidth processing capability of the first type of reduced capability UE, the second bandwidth processing capability is less than or equal to a third bandwidth threshold, and the second bandwidth processing capability is configured to determine a maximum bandwidth received and/or transmitted by the first type of reduced capability UE.

The received maximum bandwidth of the first type of reduced capability UE may be a maximum bandwidth for the first type of reduced capability UE to receive the RF signal. The transmitted maximum bandwidth of the first type of reduced capability UE may be a maximum bandwidth for the first type of reduced capability UE to transmit the RF signal.

The maximum bandwidth received and/or transmitted by the first type of reduced capability UE may be less than or equal to the second bandwidth processing capability. In some possible implementations of the present disclosure, the second bandwidth processing capability may be the sum of the maximum bandwidth for transmitting service data and the maximum bandwidth for transmitting control signaling.

The maximum bandwidth received and/or transmitted by the first type of reduced capability UE may include: a maximum bandwidth for the RF processing unit (such as a transceiver antenna, a RF processor, and the like) to transmit and/or receive RF signals.

The maximum bandwidth received and/or transmitted by the first type of reduced capability UE may include: a maximum bandwidth for RF signals that the first type of reduced capability UE can monitor, and/or a maximum bandwidth for RF signals that the first type of reduced capability UE can receive, and/or a maximum bandwidth for RF signals that the first type of reduced capability UE can transmit.

In an embodiment, the third bandwidth threshold is greater than or equal to the first bandwidth threshold.

In an embodiment, the third bandwidth threshold is equal to or less than the second bandwidth threshold.

In all embodiments of the present disclosure, the bandwidth threshold of the first type of reduced capability UE may be further defined as a third bandwidth threshold less than the first bandwidth threshold (5MHz), so as to further determine that the bandwidth processing capability of the first type of reduced capability UE is less than the first bandwidth threshold. The scenario may be used to further limit the bandwidth capability of the first type of reduced capability UE.

Alternatively, in all embodiments of the present disclosure, a bandwidth threshold of the first type of reduced capability UE may be determined to be a third bandwidth threshold that is greater than the first bandwidth threshold (5 MHz) and less than or equal to a second bandwidth threshold (20 MHz) to limit that the bandwidth processing capability of the first type of reduced capability UE may be greater than the first bandwidth threshold and less than or equal to the second bandwidth threshold. That is, in a possible implementation, it may be determined that the bandwidth capability of the first type of reduced capability UE is greater than 5 MHz and less than or equal to 20 MHz.

The maximum bandwidth received and/or transmitted by the first type of reduced capability UE may be less than or equal to a second bandwidth threshold supported by the second type of reduced capability UE and greater than or equal to the first bandwidth threshold. In this way, the bandwidth capability of the first type of reduced capability UE for receiving and/or transmitting can meet the needs of the first type of reduced capability UE for transmission. For example, the bandwidth capability meets the transmission requirements of data channels, control channels, reference signals, and/or SSBs for the first type of reduced capability UE for transmission. The bandwidth capability information may indicate that the first bandwidth processing capability is less than or equal to the first bandwidth threshold and that the second bandwidth processing capability is less than or equal to the third bandwidth threshold. For example, the bandwidth capability information may indicate that the first bandwidth processing capability is 3MHz and the second bandwidth processing capability is 10MHz. Alternatively, the bandwidth capability information may indicate that the first bandwidth processing capability is 5 MHz and the second bandwidth processing capability is 20 MHz.

In an embodiment, the bandwidth capability information is further configured to indicate at least one of: a third bandwidth processing capability of the first type of reduced capability UE, a fourth bandwidth processing capability of the first type of reduced capability UE, or a fifth bandwidth processing capability of the first type of reduced capability UE.

The third bandwidth processing capability is less than or equal to the first bandwidth threshold, or the third bandwidth processing capability is greater than the first bandwidth threshold and less than or equal to a third bandwidth threshold; and the third bandwidth processing capability is configured to determine a maximum bandwidth allocated, by the first type of reduced capability UE, to a control channel. In all embodiments of the present disclosure, for example, the third bandwidth processing capability may be the maximum bandwidth that the first type of reduced capability UE can allocate to the control channel.

The fourth bandwidth processing capability is less than or equal to the first bandwidth threshold, or the fourth bandwidth processing capability is greater than the first bandwidth threshold and less than or equal to the third bandwidth threshold; and the fourth bandwidth processing capability is configured to determine a maximum bandwidth allocated, by the first type of reduced capability UE, to a reference signal. In all embodiments of the present disclosure, for example, the third bandwidth processing capability may be the maximum bandwidth that the first type of reduced capability UE can allocate to the reference signal.

The fifth bandwidth processing capability is less than or equal to the first bandwidth threshold, or the fifth bandwidth processing capability is greater than the first bandwidth threshold and less than or equal to the third bandwidth threshold; and the fifth bandwidth processing capability is configured to determine a maximum bandwidth allocated, by the first type of reduced capability UE, to a synchronization signal and physical broadcast channel (PBCH) block (SSB). In all embodiments of the present disclosure, for example, the third bandwidth processing capability may be the maximum bandwidth that the first type of reduced capability UE can allocate to the SSB.

In all embodiments of the present disclosure, the bandwidth capability information can be used to indicate at least one of the following: a first bandwidth processing capability of a first type of reduced capability UE, a second bandwidth processing capability of a second type of reduced capability UE a third bandwidth processing capability of a third type of reduced capability UE, a fourth bandwidth processing capability of a fourth type of reduced capability UE, and a fifth bandwidth processing capability of a fifth type of reduced capability UE.

For example, in a scenario, the first type of reduced capability UE may indicate the second bandwidth processing capability through the bandwidth capability information, so that the network device can know the sum of the maximum bandwidth for transmitting service data and the maximum bandwidth for transmitting control signaling of the first type of reduced capability UE. The first type of reduced capability UE may also indicate a second bandwidth processing capability through the bandwidth capability information, such that the network device can learn the maximum bandwidth for transmitting service data of the first type of reduced capability UE. The network device can determine the maximum bandwidth for transmitting control signaling of the first type of reduced capability UE according to the first bandwidth processing capability and the second bandwidth processing capability.

The maximum bandwidth that the first type of reduced capability UE can allocate to the transmission control channel may be less than or equal to the third bandwidth processing capability. For example, the first bandwidth threshold is 5 MHz, the third bandwidth processing capability may be equal to 5 MHz, and the maximum bandwidth that the UE can allocate to the control channel may be 5 MHz.

The maximum bandwidth that the first type of reduced capability UE can allocate to the transmission reference signal may be less than or equal to the fourth bandwidth processing capability. For example, the first bandwidth threshold is 5 MHz, the fourth bandwidth processing capability may be equal to 5 MHz, and the maximum bandwidth that the UE can allocate to the reference signal may be 5 MHz.

The maximum bandwidth that the first type of reduced capability UE can allocate to the transmission SSB may be less than or equal to the fifth bandwidth processing capability. For example, the first bandwidth threshold is 5 MHz, the fifth bandwidth processing capability may be equal to 5 MHz, and the maximum bandwidth that the UE can allocate to the SSB may be 5 MHz.

The control channel may be used to transmit communication control signaling. For example, the control channel may include, but is not limited to, a physical downlink control channel (PDCCH), a physical uplink control channel (PUCCH), and/or a physical random access channel (PRACH). The maximum bandwidth that the first type of reduced capability UE can allocate to the control channel may be: the maximum bandwidth of the first type of reduced capability UE for the control signals transmitted by using the control channel resource.

The reference signal may, but is not limited to, be available to the UE for the channel measurement and/or synchronization. For example, the reference signal may include, but is not limited to, a channel state information-reference signal (CSI-RS), a positioning reference signal (PRS), and/or a sounding reference signal (SRS). For example, a maximum processing bandwidth of the baseband of the UE for the different channels and/or signals may be specified by the communication protocol.

**The** range of maximum processing bandwidths specified by the communication protocol for the different channels and/or signals may be the same.

For example, the communication protocol may specify that the maximum bandwidth that the first type of reduced capability UE can allocate to each of: the data channel, the control channel, the reference signal, and the SSB is less than or equal to the first bandwidth threshold. For example, the first bandwidth threshold is 5 MHz. The bandwidth capability information may indicate that the maximum processing bandwidth that the first type of reduced capability UE can allocate to each of: the data channel, the control channel, the reference signal, and the SSB is less than 5 MHz.

The range of maximum processing bandwidths specified by the communication protocol for the different channels and/or signals may be different. For example, different processing bandwidths can be set for different business scenarios.

For example, in a configuration, the bandwidth capability information indicates that the maximum processing bandwidth that the first type of reduced capability UE can allocate to the data channel, the control channel, and the reference signal is less than or equal to the first bandwidth threshold, and that the maximum processing bandwidth that the first type of reduced capability UE can allocate to the SSB is greater than the first bandwidth threshold, and less than or equal to the third bandwidth threshold. For example, the first bandwidth threshold is 5 MHz, and the third bandwidth threshold is 20 MHz. The bandwidth capability information may indicate that the maximum processing bandwidth that the first type of reduced capability UE can allocate to each of: the data channel and the control channel is less than 5 MHz, and the maximum processing bandwidth that the first type of reduced capability UE can allocate to the SSB is greater than 5 MHz, and less than or equal to 20 MHz.

For example, in a configuration, the bandwidth capability information indicates that the maximum processing bandwidth that the first type of reduced capability UE can allocate to the data channel is less than or equal to the first bandwidth threshold, and that the maximum processing bandwidth that the first type of reduced capability UE can allocate to the control channel, and the reference signal, and/or the SSB is greater than the first bandwidth threshold, and less than or equal to the third bandwidth threshold. For example, the first bandwidth threshold is 5 MHz, and the third bandwidth threshold is 20 MHz. The bandwidth capability information may indicate that the maximum processing bandwidth that the first type of reduced capability UE can allocate to the data channel is less than 5 MHz, and the maximum processing bandwidth that the first type of reduced capability UE can allocate to each of: the control channel and the SSB is greater than 5 MHz, and less than or equal to 20 MHz.

The foregoing examples describes several specific configurations, for the data channel, the control channel, the reference signal, and the SSB, configured by the first type of reduced capability UE. Configuration combinations that meet the above-mentioned maximum bandwidth ranges that can be allocated to the data channel, the control channel, the reference signal, and the SSB by the first type of UE can all be considered as implementations configured by the first type of reduced capability UE.

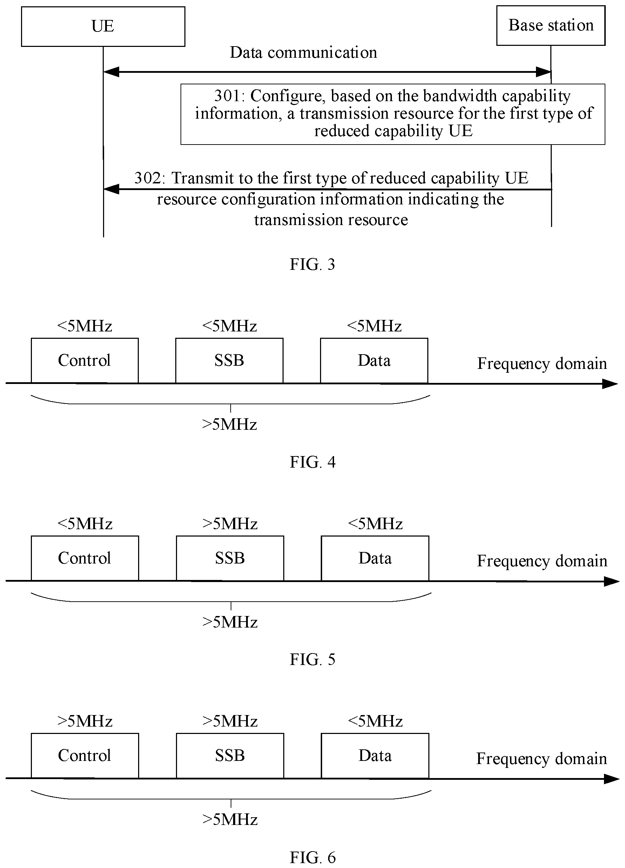

As shown in FIG. 3, the embodiment of the present disclosure provides an information transmission method that can be performed by a base station of a cellular mobile communication system, and the method includes the following steps 301 and 302.

At step 301, a transmission resource for the first type of reduced capability UE is configured based on the bandwidth capability information.

At step 302, resource configuration information indicating the transmission resource is transmitted to the first type of reduced capability UE.

Steps 301 and 302 can be implemented separately or in combination with step 201.

The base station can allocate resources for the first type of reduced capability UE based on the bandwidth capability information. The bandwidth of resource configured by the base station for the first type of reduced capability UE may be less than or equal to the bandwidth processing capability of the first type of reduced capability UE. Herein, the bandwidth processing capability may include the first bandwidth processing capability to the fifth bandwidth processing capability.

The resource configuration information may also be predefined by the communication protocol. The resource configuration information can be stored in the storage of the UE. For example, the transmission resource of the SSB may be predefined, and the first type of reduced capability UE may determine the transmission resource for the SSB based on the predefined resource configuration information.

In this way, the transmission resource is configured within the processing bandwidth indicated by the bandwidth capability information, which meets the bandwidth processing capability of the first type of reduced capability UE. On the one hand, the first type of reduced capability UE uses a relatively small bandwidth in transmission to save transmission resources. On the other hand, the first type of reduced capability UE is allowed to perform service data processing with less bandwidth, thus the workload is reduced and the power is saved.

**In** an embodiment, the resource configuration information is configured to indicate at least one of: a frequency spectrum resource of the data channel, a frequency spectrum resource of a control channel, a frequency spectrum resource of a reference signal, or a frequency spectrum resource of a synchronization signal and physical broadcast channel (PBCH) block (SSB).

A maximum bandwidth of the frequency spectrum resource of the data channel is less than or equal to the first bandwidth threshold.

A maximum bandwidth of the frequency spectrum resource of the control channel is less than or equal to the first bandwidth threshold, or the maximum bandwidth of the frequency spectrum resource of the control channel is greater than the first bandwidth threshold and less than or equal to a third bandwidth threshold.

A maximum bandwidth of the frequency spectrum resource of the reference signal is less than or equal to the first bandwidth threshold, or the maximum bandwidth of the frequency spectrum resource of the reference signal is greater than the first bandwidth threshold and less than or equal to the third bandwidth threshold.

A maximum bandwidth of the frequency spectrum resource of the SSB is less than or equal to the first bandwidth threshold, or the maximum bandwidth of the frequency spectrum resource of the SSB is greater than the first bandwidth threshold and less than or equal to the third bandwidth threshold.

The resource configuration information can be used to schedule frequency spectrum resources, time domain resources, code domain resources, etc.

Different types of frequency spectrum resources can be scheduled with different resource configuration information. For example, the resource configuration information for scheduling the frequency spectrum resource of the data channel may be different from the resource configuration information for scheduling the frequency spectrum resource of the control channel. The resource configuration information can also be used to schedule frequency spectrum resources of different channels and/or signals at the same time. For example, the resource configuration information can be used to schedule both the frequency spectrum resource of the data channel and the frequency spectrum resource of the control channel.

The base station may configure frequency spectrum resources for different channels and/or signals for the first type of reduced capability UE based on the bandwidth processing capability of the first type of reduced capability UE. Reasonable combinations of the bandwidth of the frequency spectrum resource of the data channel, the bandwidth of the frequency spectrum resource of the control channel, the bandwidth of the frequency spectrum resource of the reference signal, and the bandwidth of the frequency spectrum resource of the SSB that meet the bandwidth processing capability of the first type of reduced capability UE can all be used as implementations of the base station to configure the frequency spectrum resources for the first type of reduced capability UE.

For example, for the data channel, the maximum bandwidth that the first type of reduced capability UE can allocate to the data channel may be less than or equal to the first bandwidth threshold. When the base station determines the maximum bandwidth that can be allocated to the first type of reduced capability UE, the bandwidth of the frequency spectrum resource of the data channel can be configured for the first type of reduced capability UE to be less than or equal to the first bandwidth threshold. Therefore, the maximum processing bandwidth of the first type of reduced capability UE is conformed.

For example, in a configuration, the maximum bandwidths that the first type of reduced capability UE can respectively allocate to the data channel, the control channel, the reference signal, and the SSB are all less than or equal to the first bandwidth threshold.

For this configuration, the base station may configure the bandwidth of the frequency spectrum resource of the data channel, the bandwidth of the frequency spectrum resource of the control channel, the bandwidth of the frequency spectrum resource of the reference signal, and the bandwidth of the frequency spectrum resource of the SSB to be less than or equal to the first bandwidth threshold. In this way, the baseband of the first type of reduced capability UE can process the data channel, the control channel, the reference signal and the SSB.

For example, as shown in FIG. 4, the first bandwidth threshold is 5 MHz. The bandwidth capability information may indicate that the maximum processing bandwidth that the first type of reduced capability UE can allocate to each of: the data channel, the control channel, the reference signal, and the SSB is less than 5 MHz. The base station may configure the bandwidth of the frequency spectrum resource of the data channel, the bandwidth of the frequency spectrum resource of the control channel, the bandwidth of the frequency spectrum resource of the reference signal, and the bandwidth of the frequency spectrum resource of the SSB to be less than 5 MHz.

For example, in a configuration, the bandwidth capability information indicates that the maximum processing bandwidth that the first type of reduced capability UE can allocate to the data channel, the control channel, and the reference signal is less than or equal to a first bandwidth threshold, and that the maximum processing bandwidth that the first type of reduced capability UE can allocate to the SSB is greater than the first bandwidth threshold, and less than or equal to the third bandwidth threshold.

**For** this configuration, the base station may configure the bandwidth of the frequency spectrum resource of the data channel, the bandwidth of the frequency spectrum resource of the control channel, and the bandwidth of the frequency spectrum resource of the reference signal to all be less than or equal to the first bandwidth threshold, and configure the bandwidth of the frequency spectrum resource of the SSB to be greater than the first bandwidth threshold, and less than or equal to the third bandwidth threshold. In this way, the baseband of the first type of reduced capability UE can process the data channel, the control channel, the reference signal and the SSB.

For example, as shown in FIG. 5, the first bandwidth threshold is 5 MHz, and the third bandwidth threshold is 20 MHz. The bandwidth capability information may indicate that the maximum processing bandwidth that the first type of reduced capability UE can allocate to each of: the data channel, the control channel and the reference signal is less than 5 MHz, and the maximum processing bandwidth that the first type of reduced capability UE can allocate to the SSB is greater than 5 MHz, and less than or equal to 20 MHz. The base station may configure the bandwidth of the frequency spectrum resource of the data channel, the bandwidth of the frequency spectrum resource of the control channel, the bandwidth of the frequency spectrum resource of the reference signal to all be less than 5 MHz, and configure the bandwidth of the frequency spectrum resource of the SSB to be greater than 5 MHz, and less than or equal to 20 MHz.

For example, in a configuration, the bandwidth capability information indicates that the maximum processing bandwidth that the first type of reduced capability UE can allocate to the data channel is less than or equal to the first bandwidth threshold, and that the maximum processing bandwidth that the first type of reduced capability UE can allocate to the control channel, and the reference signal, and/or the SSB is greater than the first bandwidth threshold, and less than or equal to the third bandwidth threshold.

For this configuration, the base station may configure the bandwidth of the frequency spectrum resource of the data channel to be less than or equal to the first bandwidth threshold, and configure the bandwidth of the frequency spectrum resource of the control channel, the bandwidth of the frequency spectrum resource of the reference signal, and the bandwidth of the frequency spectrum resource of the SSB to be greater than the first bandwidth threshold, and less than or equal to the third bandwidth threshold. In this way, the baseband of the first type of reduced capability UE can process the data channel, the control channel, the reference signal and the SSB.

For example, as shown in FIG. 6, the first bandwidth threshold is 5 MHz, and the third bandwidth threshold is 20 MHz. The bandwidth capability information may indicate that the maximum processing bandwidth that the first type of reduced capability UE can allocate to the data channel is less than 5 MHz, and the maximum processing bandwidth that the first type of reduced capability UE can allocate to each of: the control channel, the reference signal, and the SSB is greater than 5 MHz, and less than or equal to 20 MHz. The base station may configure the bandwidth of the frequency spectrum resource of the data channel to be less than or equal to 5 MHz, and configure the bandwidth of the frequency spectrum resource of the control channel, the bandwidth of the frequency spectrum resource of the reference signal, and the bandwidth of the frequency spectrum resource of the SSB to be greater than 5 MHz, and less than or equal to 20 MHz.

In an embodiment, at least one of: the frequency spectrum resource of the data channel, the frequency spectrum resource of the control channel, the frequency spectrum resource of the reference signal, or the frequency spectrum resource of the SSB, as indicated by the resource configuration information, occupies a span of bandwidth in a frequency domain at the same moment that is less than or equal to the third bandwidth threshold.

**The** second bandwidth processing capability of the first type of reduced capability UE is less than or equal to the third bandwidth threshold, i.e., in the bandwidth of the RF frequency domain resource, the first type of reduced capability UE can at most process a bandwidth that is less than or equal to the third bandwidth threshold.

Therefore, the base station, when configuring the frequency spectrum resource of the data channel, the frequency spectrum resource of the control channel, the frequency spectrum resource of the reference signal, and/or the frequency spectrum resource of the SSB for the first type of reduced capability UE, at the same moment, the frequency spectrum resource occupies a span of bandwidth in the frequency domain which is less than or equal to the third bandwidth threshold.

The span of bandwidth is determined based on the lowest frequency resource and the highest frequency resource of at least one of: the frequency spectrum resource of the data channel, the frequency spectrum resource of the control channel, the frequency spectrum resource of the reference signal, or the frequency spectrum resource of the SSB.

For example, a difference between the lowest frequency and the highest frequency occupied by any number (e.g., two or more) of simultaneously monitored signals and/or channels configured by the base station to the first type of reduced capability UE is less than or equal to the third bandwidth threshold. Herein, the signals may include SSBs and/or reference signals, and the channels may include data channels, control channels and/or reference signals.

In an embodiment, the resource configuration information is configured to indicate a bandwidth part (BWP) configured to the first type of reduced capability UE, and the BWP has a bandwidth less than or equal to a third bandwidth threshold.

The RF capability of the first type of reduced capability UE can be specified by a communication protocol, etc. The RF capability may be a second bandwidth processing capability.

For example, the communication protocol may specify that the second bandwidth processing capability of the first type of reduced capability UE is less than or equal to the third bandwidth threshold, i.e., the maximum channel bandwidth of the radio frequency of the first type of reduced capability UE is less than or equal to the third bandwidth threshold.

When the base station configures the BWP for the first type of reduced capability UE, the base station may configure the BWP to be less than or equal to the third bandwidth threshold. In this way, the RF capability of the first type of reduced capability UE can be met.

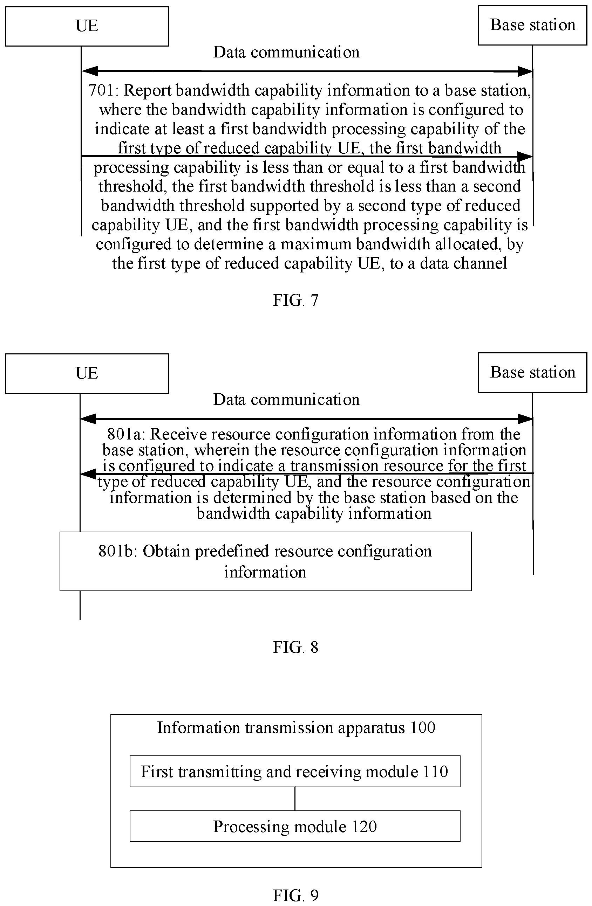

As shown in FIG. 7, the embodiment of the present disclosure provides an information transmission method that can be performed by a first type of reduced capability UE of a cellular mobile communication system, and the method includes the following step 701.

At step 701, bandwidth capability information is reported to a base station, where the bandwidth capability information is configured to indicate at least a first bandwidth processing capability of the first type of reduced capability UE, the first bandwidth processing capability is less than or equal to a first bandwidth threshold, the first bandwidth threshold is less than a second bandwidth threshold supported by a second type of reduced capability UE, and the first bandwidth processing capability is configured to determine a maximum bandwidth allocated, by the first type of reduced capability UE, to a data channel.

It will be noted that the definition of the same parameters can be the same in the method of the base station and the method of the UE, which are not repeated here.

In all embodiments of the present disclosure, the first type of reduced capability UE may report the type of the first type of the first type of reduced capability UE through the bandwidth capability information, so that the base station side can know the first bandwidth processing capability of the first type of reduced capability UE and/or the first bandwidth threshold.

The first type of reduced capability UE may be an enhanced RedCap UE, and the enhanced RedCap UE can be called an eRedCap UE.

The second type of reduced capability UE may be a RedCap UE in 3GPP Release 17(R17). The bandwidth processing capability of the radio frequency (RF) transceiver and baseband processing module for the second type of reduced capability UE in the FR1 (Sub-6GHz) frequency band is 20MHz. In a possible implementation, a maximum bandwidth which the second type of reduced capability UE can support is 20MHz.

The first type of reduced capability UE may have a lower baseband processing bandwidth and/or RF processing bandwidth than the second type of reduced capability UE. In this way, the first type of reduced capability UE can save resources and power compared with the second type of reduced capability UE in data communication. In a possible implementation, a bandwidth processing capability (maximum bandwidth) which the second type of reduced capability UE can support is 5MHz.

The first type of reduced capability UE can transmit the bandwidth capability information to the base station during and/or after accessing the base station. The second type of reduced capability UE can transmit the bandwidth capability information to the base station during and/or after accessing the base station.

The maximum bandwidth that can be allocated to the data channel by the first type of reduced capability UE may include, but is not limited to, the maximum bandwidth that can be allocated to the data channel by the baseband of the first type of reduced capability UE.

The maximum bandwidth that can be allocated to the data channel by the first type of reduced capability UE may include, but is not limited to, the maximum bandwidth that can be allocated to the data channel by the first type of reduced capability UE. Herein, the data channel may include, but is not limited to, a service data channel. The data channel can be used to transmit communication service data. For example, the data channel may include, but is not limited to, a PDSCH and/or a PUSCH.

The maximum bandwidth that the first type of reduced capability UE can allocate to the data channel can be equal to or less than the first bandwidth processing capability. Alternatively, the maximum bandwidth that the first type of reduced capability UE can allocate to the data transmission is less than or equal to the first bandwidth threshold. The first bandwidth processing capability may be less than or equal to the first bandwidth threshold.

**In** an embodiment, the first bandwidth threshold is 5 MHz and the second bandwidth threshold is 20 MHz. For example, the bandwidth capability information may be used to indicate a first bandwidth processing capability of the first type of reduced capability UE; where the first bandwidth processing capability is less than or equal to 5 MHz.

In all embodiments of the present disclosure, the bandwidth capability information may be the bandwidth value itself, a parameter for identifying the bandwidth value, or a parameter that can determine the bandwidth value according to a preset method, which is not limited in the embodiments of the present disclosure. This is not described in the embodiments of the present disclosure.

For example, the first bandwidth processing capability may be specified by a communication protocol. For example, the communication protocol may specify that the first bandwidth processing capability of the first type of first type of reduced capability UE is 5MHz. That is, the maximum bandwidth that the first type of reduced capability UE can allocate to the data channel is less than or equal to 5MHz.

The first bandwidth processing capability can be specified by the communication protocol, reported by the UE to the base station, determined by the base station and transmitted to the UE, or agreed by the base station and the UE. For example, the bandwidth capability information transmitted by the first type of reduced capability UE may include an identifier or indicator for indicating the type of that first type of reduced capability UE to allow the network device to determine that the UE transmitting the bandwidth capability information is a first type of reduced capability UE. In a possible implementation, when the network device determines that the UE is the first type of reduced capability UE through the bandwidth capability information transmitted by the UE, the first bandwidth processing capability of the first type of reduced capability UE can be correspondingly determined.

**The** maximum bandwidth that the first type of reduced capability UE can allocate to the data channel may include, but is not limited to, a bandwidth on which a signal transmission path of a baseband can transmit data, and/or a bandwidth on which a signal processing component (such as a baseband processor) of a baseband can process data.

The base station can allocate resources for the first type of reduced capability UE based on the bandwidth capability information reported by the first type of reduced capability UE. The bandwidth of the data channel resource configured by the base station for the first type of reduced capability UE may be less than or equal to the first bandwidth processing capability.

**In** this way, the first type of reduced capability UE indicates the first bandwidth processing capability of the first type of reduced capability UE to the base station through the bandwidth capability information, and the base station configures the data channel resource for the first type of reduced capability UE. Therefore, the first type of reduced capability UE can perform service data processing with relatively small bandwidth processing capability compared with other types of UE, thus reducing workload and further saving power.

**In** an embodiment, the bandwidth capability information is further configured to indicate a second bandwidth processing capability of the first type of reduced capability UE, the second bandwidth processing capability is less than or equal to a third bandwidth threshold, and the second bandwidth processing capability is configured to determine a maximum bandwidth received and/or transmitted by the first type of reduced capability UE.

The received maximum bandwidth of the first type of reduced capability UE may be a maximum bandwidth on which the first type of reduced capability UE receives the RF signal. The transmitted maximum bandwidth of the first type of reduced capability UE may be a maximum bandwidth on which the first type of reduced capability UE transmits the RF signal.

The maximum bandwidth received and/or transmitted by the first type of reduced capability UE may be less than or equal to the second bandwidth processing capability. In some possible implementations of the present disclosure, the second bandwidth processing capability may be the sum of the maximum bandwidth for transmitting service data and the maximum bandwidth for transmitting control signaling.

The maximum bandwidth received and/or transmitted by the first type of reduced capability UE may include: a maximum bandwidth for the RF processing unit (such as a transceiver antenna, a RF processor, and the like) to transmit and/or receive RF signals.

The maximum bandwidth received and/or transmitted by the first type of reduced capability UE may include: a maximum bandwidth for RF signals that the first type of reduced capability UE can monitor, and/or a maximum bandwidth for RF signals that the first type of reduced capability UE can receive, and/or a maximum bandwidth for RF signals that the first type of reduced capability UE can transmit.

**In** an embodiment, the third bandwidth threshold is greater than or equal to the first bandwidth threshold.

**In** an embodiment, the third bandwidth threshold is equal to or less than the second bandwidth threshold.

**In** all embodiments of the present disclosure, the bandwidth threshold of the first type of reduced capability UE may be further defined as a third bandwidth threshold less than the first bandwidth threshold (5MHz), so as to further determine that the bandwidth processing capability of the first type of reduced capability UE is less than the first bandwidth threshold. The scenario exemplarily may be used to further limit the bandwidth capability of the first type of reduced capability UE.

Alternatively, in all embodiments of the present disclosure, a bandwidth threshold of the first type of reduced capability UE may be determined to be a third bandwidth threshold that is greater than the first bandwidth threshold (5 MHz) and less than or equal to a second bandwidth threshold (20 MHz) to limit that the bandwidth processing capability of the first type of reduced capability UE may be greater than the first bandwidth threshold and less than or equal to the second bandwidth threshold. That is, in a possible implementation, it may be determined that the bandwidth capability of the first type of reduced capability UE is greater than 5 MHz and less than or equal to 20 MHz.

The maximum bandwidth received and/or transmitted by the first type of reduced capability UE may be less than or equal to a second bandwidth threshold supported by the second type of reduced capability UE and greater than or equal to the first bandwidth threshold. In this way, the bandwidth capability of the first type of reduced capability UE for receiving and/or transmitting can meet the needs of the first type of reduced capability UE for transmission. For example, the bandwidth capability meets the transmission requirements of data channels, control channels, reference signals, and/or SSBs for the first type of reduced capability UE for transmission.

The bandwidth capability information may indicate that the first bandwidth processing capability is less than or equal to the first bandwidth threshold and that the second bandwidth processing capability is less than or equal to the third bandwidth threshold. For example, the bandwidth capability information may indicate that the first bandwidth processing capability is 3MHz and the second bandwidth processing capability is 10MHz. Alternatively, the bandwidth capability information may indicate that the first bandwidth processing capability is 5 MHz and the second bandwidth processing capability is 20 MHz.

In an embodiment, the bandwidth capability information is further configured to indicate at least one of: a third bandwidth processing capability of the first type of reduced capability UE, a fourth bandwidth processing capability of the first type of reduced capability UE, or a fifth bandwidth processing capability of the first type of reduced capability UE.

The third bandwidth processing capability is less than or equal to the first bandwidth threshold, or the third bandwidth processing capability is greater than the first bandwidth threshold and less than or equal to a third bandwidth threshold; and the third bandwidth processing capability is configured to determine a maximum bandwidth allocated, by the first type of reduced capability UE, to a control channel; In all embodiments of the present disclosure, for example, the third bandwidth processing capability may be the maximum bandwidth that the first type of reduced capability UE can allocate to the control channel.

The fourth bandwidth processing capability is less than or equal to the first bandwidth threshold, or the fourth bandwidth processing capability is greater than the first bandwidth threshold and less than or equal to the third bandwidth threshold; and the fourth bandwidth processing capability is configured to determine a maximum bandwidth allocated, by the first type of reduced capability UE, to a reference signal. In all embodiments of the present disclosure, for example, the third bandwidth processing capability may be the maximum bandwidth that the first type of reduced capability UE can allocate to the reference signal.

The fifth bandwidth processing capability is less than or equal to the first bandwidth threshold, or the fifth bandwidth processing capability is greater than the first bandwidth threshold and less than or equal to the third bandwidth threshold; and the fifth bandwidth processing capability is configured to determine a maximum bandwidth allocated, by the first type of reduced capability UE, to a synchronization signal and physical broadcast channel (PBCH) block (SSB). In all embodiments of the present disclosure, for example, the third bandwidth processing capability may be the maximum bandwidth that the first type of reduced capability UE can allocate to the SSB.

**In** all embodiments of the present disclosure, the bandwidth capability information can be used to indicate at least one of the following: a first bandwidth processing capability of a first type of reduced capability UE, a second bandwidth processing capability of a second type of reduced capability UE a third bandwidth processing capability of a third type of reduced capability UE, a fourth bandwidth processing capability of a fourth type of reduced capability UE, and a fifth bandwidth processing capability of a fifth type of reduced capability UE.

For example, in a scenario, the first type of reduced capability UE may indicate the second bandwidth processing capability through the bandwidth capability information, so that the network device can know the sum of the maximum bandwidth for transmitting service data and the maximum bandwidth for transmitting control signaling of the first type of reduced capability UE. The first type of reduced capability UE may also indicate a second bandwidth processing capability through the bandwidth capability information, such that the network device can learn the maximum bandwidth for transmitting service data of the first type of reduced capability UE. The network device can determine the maximum bandwidth for transmitting control signaling of the first type of reduced capability UE according to the first bandwidth processing capability and the second bandwidth processing capability.

The maximum bandwidth that the first type of reduced capability UE can allocate to the transmission control channel may be less than or equal to the third bandwidth processing capability. For example, the first bandwidth threshold is 5 MHz, the third bandwidth processing capability may be equal to 5 MHz, and the maximum bandwidth that the UE can allocate to the control channel may be 5 MHz.

The maximum bandwidth that the first type of reduced capability UE can allocate to the transmission reference signal may be less than or equal to the fourth bandwidth processing capability. For example, the first bandwidth threshold is 5 MHz, the fourth bandwidth processing capability may be equal to 5 MHz, and the maximum bandwidth that the UE can allocate to the reference signal may be 5 MHz.

The maximum bandwidth that the first type of reduced capability UE can allocate to the transmission SSB may be less than or equal to the fifth bandwidth processing capability. For example, the first bandwidth threshold is 5 MHz, the fifth bandwidth processing capability may be equal to 5 MHz, and the maximum bandwidth that the UE can allocate to the SSB may be 5 MHz.

The control channel may be used to transmit communication control signaling. For example, the control channel may include, but is not limited to, a PDCCH, a PUCCH, and/or a PRACH. The maximum bandwidth that the first type of reduced capability UE can allocate to the control channel may be: the maximum bandwidth of the first type of reduced capability UE for the control signals transmitted by using the control channel resource.

The reference signal can be used to transmit reference signaling. The reference signal may, but is not limited to, be available to the UE for the channel measurement and/or synchronization. For example, the reference signal may include, but is not limited to, a CSI-RS, a PRS, and/or an SRS. For example, a maximum processing bandwidth of the baseband of the UE for the different channels and/or signals may be specified by the communication protocol.

The range of maximum processing bandwidths specified by the communication protocol for the different channels and/or signals may be the same.

For example, the communication protocol may specify at least one of maximum bandwidths that the first type of reduced capability UE can allocate to the data channel, the control channel, the reference signal, and the SSB, respectively, and the maximum bandwidth that the first type of reduced capability UE can allocate to each of: the data channel, the control channel, the reference signal, and the SSB is less than or equal to the first bandwidth threshold. For example, the first bandwidth threshold is 5 MHz. The bandwidth capability information may indicate that the maximum processing bandwidth that the first type of reduced capability UE can allocate to each of: the data channel, the control channel, the reference signal, and the SSB is less than 5 MHz.

The range of maximum processing bandwidths specified by the communication protocol for the different channels and/or signals may be different. For example, different processing bandwidths can be set for different business scenarios.

For example, in a configuration, the bandwidth capability information indicates that the maximum processing bandwidth that the first type of reduced capability UE can allocate to the data channel, the control channel, and the reference signal is less than or equal to a first bandwidth threshold, and that the maximum processing bandwidth that the first type of reduced capability UE can allocate to the SSB is greater than the first bandwidth threshold, and less than or equal to the third bandwidth threshold. For example, the first bandwidth threshold is 5 MHz, and the third bandwidth threshold is 20 MHz. The bandwidth capability information may indicate that the maximum processing bandwidth that the first type of reduced capability UE can allocate to each of: the data channel and the control channel is less than 5 MHz, and the maximum processing bandwidth that the first type of reduced capability UE can allocate to the SSB is greater than 5 MHz, and less than or equal to 20 MHz.

For example, in a configuration, the bandwidth capability information indicates that the maximum processing bandwidth that the first type of reduced capability UE can allocate to the data channel is less than or equal to the first bandwidth threshold, and that the maximum processing bandwidth that the first type of reduced capability UE can allocate to the control channel, and the reference signal, and/or the SSB is greater than the first bandwidth threshold, and less than or equal to the third bandwidth threshold. For example, the first bandwidth threshold is 5 MHz, and the third bandwidth threshold is 20 MHz. The bandwidth capability information may indicate that the maximum processing bandwidth that the first type of reduced capability UE can allocate to the data channel is less than 5 MHz, and the maximum processing bandwidth that the first type of reduced capability UE can allocate to each of: the control channel and the SSB is greater than 5 MHz, and less than or equal to 20 MHz.

The foregoing examples describes several specific configurations, for the data channel, the control channel, the reference signal, and the SSB, configured by the first type of reduced capability UE. Configuration combinations that meet the above-mentioned maximum bandwidth ranges that can be allocated to each of: the data channel, the control channel, the reference signal, and the SSB by the first type of UE can be considered as implementations configured by the first type of reduced capability UE.

As shown in FIG. 8, the embodiment of the present disclosure provides an information transmission method that can be performed by a first type of reduced capability UE of a cellular mobile communication system, and the method includes the following step 801a and/or step 801b.

At step 801a, resource configuration information from the base station is received, where the resource configuration information is configured to indicate a transmission resource for the first type of reduced capability UE, and the resource configuration information is determined by the base station based on the bandwidth capability information.

At step 801b, predefined resource configuration information is obtained.

The steps 801a and 801b can be implemented separately or in combination with step 701.

The base station can allocate resources for the first type of reduced capability UE based on the bandwidth capability information. The bandwidth of resource configured by the base station for the first type of reduced capability UE may be less than or equal to the bandwidth processing capability of the first type of reduced capability UE. Herein, the bandwidth processing capability may include the first bandwidth processing capability to the fifth bandwidth processing capability.

The resource configuration information may also be predefined by the communication protocol. The resource configuration information can be stored in the storage of the UE. For example, the transmission resources of the SSB may be predefined, and the first type of reduced capability UE may determine the transmission resource for the SSB based on the predefined resource configuration information.

In this way, the transmission resource is configured within the processing bandwidth indicated by the bandwidth capability information, which meets the bandwidth processing capability of the first type of reduced capability UE. On the one hand, the first type of UE uses a relatively small bandwidth in transmission to save transmission resources. On the other hand, the first type of reduced capability UE is allowed to perform service data processing with less bandwidth, thus the workload is reduced and the power is saved.

In an embodiment, the resource configuration information is configured to indicate at least one of: a frequency spectrum resource of the data channel, a frequency spectrum resource of a control channel, a frequency spectrum resource of a reference signal, or a frequency spectrum resource of an SSB.

A maximum bandwidth of the frequency spectrum resource of the data channel is less than or equal to the first bandwidth threshold.

A maximum bandwidth of the frequency spectrum resource of the control channel is less than or equal to the first bandwidth threshold, or the maximum bandwidth of the frequency spectrum resource of the control channel is greater than the first bandwidth threshold and less than or equal to a third bandwidth threshold.

A maximum bandwidth of the frequency spectrum resource of the reference signal is less than or equal to the first bandwidth threshold, or the maximum bandwidth of the frequency spectrum resource of the reference signal is greater than the first bandwidth threshold and less than or equal to the third bandwidth threshold.

A maximum bandwidth of the frequency spectrum resource of the SSB is less than or equal to the first bandwidth threshold, or the maximum bandwidth of the frequency spectrum resource of the SSB is greater than the first bandwidth threshold and less than or equal to the third bandwidth threshold.

The resource configuration information can be used to schedule frequency spectrum resources, time domain resources, code domain resources, etc.

Different types of frequency spectrum resources can be scheduled with different resource configuration information. For example, the resource configuration information for scheduling the frequency spectrum resource of the data channel may be different from the resource configuration information for scheduling the frequency spectrum resource of the control channel. The resource configuration information can also be used to schedule frequency spectrum resources of different channels and/or signals at the same time. For example, the resource configuration information can be used to schedule both the frequency spectrum resource of the data channel and the frequency spectrum resource of the control channel.

The base station may configure frequency spectrum resources for different channels and/or signals for the first type of reduced capability UE based on the bandwidth processing capability of the first type of reduced capability UE. Reasonable combinations of the bandwidth of the frequency spectrum resource of the data channel, the bandwidth of the frequency spectrum resource of the control channel, the bandwidth of the frequency spectrum resource of the reference signal, and the bandwidth of the frequency spectrum resource of the SSB that meet the bandwidth processing capability of the first type of reduced capability UE can all be used as implementations of the base station to configure the frequency spectrum resources for the first type of reduced capability UE.

For example, for the data channel, the maximum bandwidth that the first type of reduced capability UE can allocate to the data channel may be less than or equal to the first bandwidth threshold. When the base station determines the maximum bandwidth that can be allocated to the first type of reduced capability UE, the bandwidth of the frequency spectrum resource of the data channel can be configured for the first type of reduced capability UE to be less than or equal to the first bandwidth threshold. Therefore, the maximum processing bandwidth of the first type of reduced capability UE is confirmed.

For example, in a configuration, the maximum bandwidth that the first type of reduced capability UE can allocate to each of: the data channel, the control channel, the reference signal, and the SSB is less than or equal to the first bandwidth threshold.

For this configuration, the base station may configure the bandwidth of the frequency spectrum resource of the data channel, the bandwidth of the frequency spectrum resource of the control channel, the bandwidth of the frequency spectrum resource of the reference signal, and the bandwidth of the frequency spectrum resource of the SSB to be less than or equal to the first bandwidth threshold. In this way, the baseband of the first type of reduced capability UE can process the data channel, the control channel, the reference signal and the SSB.

For example, as shown in FIG. 4, the first bandwidth threshold is 5 MHz. The bandwidth capability information may indicate that the maximum processing bandwidth that the first type of reduced capability UE can allocate to each of: the data channel, the control channel, the reference signal, and the SSB is less than 5 MHz. The base station may configure the bandwidth of the frequency spectrum resource of the data channel, the bandwidth of the frequency spectrum resource of the control channel, the bandwidth of the frequency spectrum resource of the reference signal, and the bandwidth of the frequency spectrum resource of the SSB to be less than 5 MHz.

For example, in a configuration, the bandwidth capability information indicates that the maximum processing bandwidth that the first type of reduced capability UE can allocate to the data channel, the control channel, and the reference signal is less than or equal to a first bandwidth threshold, and that the maximum processing bandwidth that the first type of reduced capability UE can allocate to the SSB is greater than the first bandwidth threshold, and less than or equal to the third bandwidth threshold.

**For** this configuration, the base station may configure the bandwidth of the frequency spectrum resource of the data channel, the bandwidth of the frequency spectrum resource of the control channel, and the bandwidth of the frequency spectrum resource of the reference signal to all be less than or equal to the first bandwidth threshold, and configure the bandwidth of the frequency spectrum resource of the SSB to be greater than the first bandwidth threshold, and less than or equal to the third bandwidth threshold. In this way, the baseband of the first type of reduced capability UE can process the data channel, the control channel, the reference signal and the SSB.

For example, as shown in FIG. 5, the first bandwidth threshold is 5 MHz, and the third bandwidth threshold is 20 MHz. The bandwidth capability information may indicate that the maximum processing bandwidth that the first type of reduced capability UE can allocate to each of: the data channel, the control channel and the reference signal is less than 5 MHz, and the maximum processing bandwidth that the first type of reduced capability UE can allocate to the SSB is greater than 5 MHz, and less than or equal to 20 MHz. The base station may configure the bandwidth of the frequency spectrum resource of the data channel, the bandwidth of the frequency spectrum resource of the control channel, the bandwidth of the frequency spectrum resource of the reference signal to all be less than 5 MHz, and configure the bandwidth of the frequency spectrum resource of the SSB to be greater than 5 MHz, and less than or equal to 20 MHz.

For example, in a configuration, the bandwidth capability information indicates that the maximum processing bandwidth that the first type of reduced capability UE can allocate to the data channel is less than or equal to the first bandwidth threshold, and that the maximum processing bandwidth that the first type of reduced capability UE can allocate to the control channel, and the reference signal, and/or the SSB is greater than the first bandwidth threshold, and less than or equal to the third bandwidth threshold.

For this configuration, the base station may configure the bandwidth of the frequency spectrum resource of the data channel to be less than or equal to the first bandwidth threshold, and configure the bandwidth of the frequency spectrum resource of the control channel, the bandwidth of the frequency spectrum resource of the reference signal, and the bandwidth of the frequency spectrum resource of the SSB to be greater than the first bandwidth threshold, and less than or equal to the third bandwidth threshold. In this way, the baseband of the first type of reduced capability UE can process the data channel, the control channel, the reference signal and the SSB.

For example, as shown in FIG. 6, the first bandwidth threshold is 5 MHz, and the third bandwidth threshold is 20 MHz. The bandwidth capability information may indicate that the maximum processing bandwidth that the first type of reduced capability UE can allocate to the data channel is less than 5 MHz, and the maximum processing bandwidth that the first type of reduced capability UE can allocate to each of: the control channel, the reference signal, and the SSB is greater than 5 MHz, and less than or equal to 20 MHz. The base station may configure the bandwidth of the frequency spectrum resource of the data channel to be less than or equal to 5 MHz, and configure the bandwidth of the frequency spectrum resource of the control channel, the bandwidth of the frequency spectrum resource of the reference signal, and the bandwidth of the frequency spectrum resource of the SSB to be greater than 5 MHz, and less than or equal to 20 MHz.

In an embodiment, at least one of: the frequency spectrum resource of the data channel, the frequency spectrum resource of the control channel, the frequency spectrum resource of the reference signal, or the frequency spectrum resource of the SSB, as indicated by the resource configuration information, occupies a span of bandwidth in a frequency domain at the same moment that is less than or equal to the third bandwidth threshold.

The second bandwidth processing capability of the first type of reduced capability UE is less than or equal to the third bandwidth threshold, i.e., in the bandwidth of the RF frequency domain resource, the first type of reduced capability UE can at most process a bandwidth that is less than or equal to the third bandwidth threshold.

Therefore, the base station, when configuring the frequency spectrum resource of the data channel, the frequency spectrum resource of the control channel, the frequency spectrum resource of the reference signal, and/or the frequency spectrum resource of the SSB for the first type of reduced capability UE, at the same moment, the frequency spectrum resource occupies a span of bandwidths in the frequency domain which is less than or equal to the third bandwidth threshold.

The span of bandwidth is determined based on the lowest frequency resource and the highest frequency resource of at least one of: the frequency spectrum resource of the data channel, the frequency spectrum resource of the control channel, the frequency spectrum resource of the reference signal, or the frequency spectrum resource of the SSB.

For example, a difference between the lowest frequency and the highest frequency occupied by any number (e.g., two or more) of simultaneously monitored signals and/or channels configured by the base station to the first type of reduced capability UE is less than or equal to the third bandwidth threshold. Herein, the signals may include SSBs and/or reference signals, and the channels may include data channels, control channels and/or reference signals.

In an embodiment, the resource configuration information is configured to indicate a bandwidth part (BWP) configured to the first type of reduced capability UE, and the BWP has a bandwidth less than or equal to a third bandwidth threshold.

The RF capability of the first type of reduced capability UE can be specified by a communication protocol, etc. The RF capability may be a second bandwidth processing capability.

The second bandwidth processing capability of the first type of reduced capability UE is less than or equal to the third bandwidth threshold, i.e., in the bandwidth of the RF frequency domain resource, the first type of reduced capability UE can at most process a bandwidth that is less than or equal to the third bandwidth threshold.

When the base station configures the BWP for the first type of reduced capability UE, the base station may configure the BWP to be less than or equal to the third bandwidth threshold. In this way, the RF capability of the first type of reduced capability UE can be met.

A specific example is provided below in connection with any of the embodiments.

In the related art, it is required to further reduce the bandwidth of the UE on the basis of the FR1 RedCap UE to obtain an eRedCap UE. However, reducing the RF bandwidth and the baseband bandwidth at the same time will bring great changes to the protocol and affect the realization of the product. Therefore, it is necessary to define a terminal that is more friendly to the protocol and product implementation. The following methods 1 to 3 is adopted.

### Method 1:

The processing bandwidth on the baseband of the terminal for the data channel, the control channel, the reference signal, and the SSB is less than or equal to the first threshold.

The processing bandwidth/maximum channel bandwidth of the terminal on the radio frequency (RF) is less than or equal to the second threshold.

The frequency spectrum resource, occupied by each data channel, each control channel, each reference signal, or each SSB, configured by the base station is not greater than the first threshold.

The bandwidth of the frequency spectrum resource occupied by BWP configured by the base station for the terminal is not greater than the second threshold.

The base station is prohibited from configuring the terminal to simultaneously monitor any two or more signals/channels that do not meet the first condition. The first condition is that the difference between the lowest frequency and the highest frequency occupied by the two or more signals is greater than a second threshold.

The second threshold is greater than the first threshold. For example, the first threshold is 5MHz, and the second threshold is 20MHz.

The control channel includes: the PDCCH, and/or the PRACH, and the reference signal includes the CSI-RS, the PRS, and/or the SRS.

### Method 2:

The processing bandwidth on the baseband of the terminal for the data channel, the control channel, and the reference signal is less than or equal to the first threshold.

The processing bandwidth capability of the terminal for the SSB is greater than the first threshold, and less than or equal to the second threshold.

The processing bandwidth/maximum channel bandwidth of the terminal on the radio frequency (RF) is less than or equal to the second threshold.

The frequency spectrum resource, occupied by each data channel, each control channel, or each reference signal, configured by the base station is not greater than the first threshold.

The base station can configure a resource for the SSB greater than the first threshold, and less than or equal to the second threshold.

The bandwidth of the frequency spectrum resource occupied by BWP configured by the base station for the terminal is not greater than the second threshold.

The base station is prohibited from configuring the terminal to simultaneously monitor any two or more signals/channels that do not meet the first condition. The first condition is that the difference between the lowest frequency and the highest frequency occupied by the two or more signals is greater than a second threshold.

The second threshold is greater than the first threshold. For example, the first threshold is 5MHz, and the second threshold is 20MHz.

The control channel includes: the PDCCH, and/or the PRACH, and the reference signal includes the CSI-RS, the PRS, and/or the SRS.

### Method 3:

The processing bandwidth on the baseband of the terminal for the data channel is less than or equal to the first threshold.

The processing bandwidth capability of the terminal for the control channel, the reference signal and/or the SSB is greater than the first threshold, and less than or equal to the second threshold.

The processing bandwidth/maximum channel bandwidth of the terminal on the radio frequency (RF) is less than or equal to the second threshold.

The bandwidth of the frequency spectrum resource, occupied by each data channel, configured by the base station is not greater than the first threshold.

The base station can configure a resource for the SSB, the control channel, and/or the reference signal greater than the first threshold, and less than or equal to the second threshold.

The bandwidth of the frequency spectrum resource, occupied by BWP, configured by the base station for the terminal is not greater than the second threshold.

The base station is prohibited from configuring the terminal to simultaneously monitor any two or more signals/channels that do not meet the first condition. The first condition is that the difference between the lowest frequency and the highest frequency occupied by the two or more signals is greater than a second threshold.

The second threshold is greater than the first threshold. For example, the first threshold is 5MHz, and the second threshold is 20MHz.

The control channel includes: the PDCCH, and/or the PRACH, and the reference signal includes the CSI-RS, the PRS, and/or the SRS.

An embodiment of the present invention also provides an information transmission apparatus, as shown in FIG. 9, the apparatus is applied to in a base station of a cellular mobile wireless communication, and the apparatus 100 includes a first transmitting and receiving module 110.

The first transmitting and receiving module 110 is configured to receive bandwidth capability information reported by a first type of reduced capability UE, where the bandwidth capability information is configured to indicate at least a first bandwidth processing capability of the first type of reduced capability UE, the first bandwidth processing capability is less than or equal to a first bandwidth threshold, the first bandwidth threshold is less than a second bandwidth threshold supported by a second type of reduced capability UE, and the first bandwidth processing capability is configured to determine a maximum bandwidth allocated, by the first type of reduced capability UE, to a data channel.

In an embodiment, the bandwidth capability information is further configured to indicate a second bandwidth processing capability of the first type of reduced capability UE, the second bandwidth processing capability is less than or equal to a third bandwidth threshold, and the second bandwidth processing capability is configured to determine a maximum bandwidth received and/or transmitted by the first type of reduced capability UE.

In an embodiment, the bandwidth capability information is further configured to indicate at least one of: a third bandwidth processing capability of the first type of reduced capability UE, a fourth bandwidth processing capability of the first type of reduced capability UE, or a fifth bandwidth processing capability of the first type of reduced capability UE.

The third bandwidth processing capability is less than or equal to the first bandwidth threshold, or the third bandwidth processing capability is greater than the first bandwidth threshold and less than or equal to a third bandwidth threshold; and the third bandwidth processing capability is configured to determine a maximum bandwidth allocated, by the first type of reduced capability UE, to a control channel;

The fourth bandwidth processing capability is less than or equal to the first bandwidth threshold, or the fourth bandwidth processing capability is greater than the first bandwidth threshold and less than or equal to the third bandwidth threshold; and the fourth bandwidth processing capability is configured to determine a maximum bandwidth allocated, by the first type of reduced capability UE, to a reference signal.

The fifth bandwidth processing capability is less than or equal to the first bandwidth threshold, or the fifth bandwidth processing capability is greater than the first bandwidth threshold and less than or equal to the third bandwidth threshold; and the fifth bandwidth processing capability is configured to determine a maximum bandwidth allocated, by the first type of reduced capability UE, to a synchronization signal and physical broadcast channel (PBCH) block (SSB).

In an embodiment, the third bandwidth threshold is greater than or equal to the first bandwidth threshold.

In an embodiment, the third bandwidth threshold is equal to or less than the second bandwidth threshold.

In an embodiment, the apparatus further includes a processing module 120.

The processing module 120 is configured to configure, based on the bandwidth capability information, a transmission resource for the first type of reduced capability UE.

The first receiving module is further configured to transmit to the first type of reduced capability UE resource configuration information indicating the transmission resource.

In an embodiment, the resource configuration information is configured to indicate at least one of: a frequency spectrum resource of the data channel, a frequency spectrum resource of a control channel, a frequency spectrum resource of a reference signal, or a frequency spectrum resource of a synchronization signal and physical broadcast channel (PBCH) block (SSB).

A maximum bandwidth of the frequency spectrum resource of the data channel is less than or equal to the first bandwidth threshold.

A maximum bandwidth of the frequency spectrum resource of the control channel is less than or equal to the first bandwidth threshold, or the maximum bandwidth of the frequency spectrum resource of the control channel is greater than the first bandwidth threshold and less than or equal to a third bandwidth threshold.

A maximum bandwidth of the frequency spectrum resource of the reference signal is less than or equal to the first bandwidth threshold, or the maximum bandwidth of the frequency spectrum resource of the reference signal is greater than the first bandwidth threshold and less than or equal to the third bandwidth threshold.

A maximum bandwidth of the frequency spectrum resource of the SSB is less than or equal to the first bandwidth threshold, or the maximum bandwidth of the frequency spectrum resource of the SSB is greater than the first bandwidth threshold and less than or equal to the third bandwidth threshold.

In an embodiment, at least one of: the frequency spectrum resource of the data channel, the frequency spectrum resource of the control channel, the frequency spectrum resource of the reference signal, or the frequency spectrum resource of the SSB, as indicated by the resource configuration information, occupies a span of bandwidth in a frequency domain at the same moment that is less than or equal to the third bandwidth threshold.

In an embodiment, the resource configuration information is configured to indicate a bandwidth part (BWP) configured to the first type of reduced capability UE, and the BWP has a bandwidth less than or equal to a third bandwidth threshold.

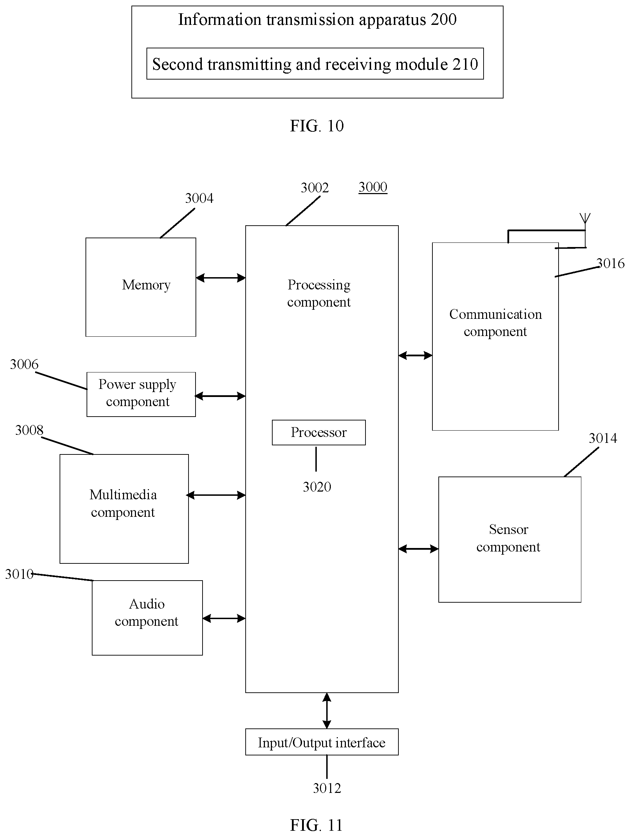

An embodiment of the present invention also provides an information transmission apparatus, as shown in FIG. 10, the apparatus is applied to the first type of reduced capability UE in the cellular mobile wireless communication, and the apparatus 200 includes a second transmitting and receiving module 210.

The second transmitting and receiving module 210 is configured to report bandwidth capability information to a base station, where the bandwidth capability information is configured to indicate at least a first bandwidth processing capability of the first type of reduced capability UE, the first bandwidth processing capability is less than or equal to a first bandwidth threshold, the first bandwidth threshold is less than a second bandwidth threshold supported by a second type of reduced capability UE, and the first bandwidth processing capability is configured to determine a maximum bandwidth allocated, by the first type of reduced capability UE, to a data channel.

In an embodiment, the bandwidth capability information is further configured to indicate: a second bandwidth processing capability of the first type of reduced capability UE, the second bandwidth processing capability is less than or equal to a third bandwidth threshold, and the second bandwidth processing capability is configured to determine a maximum bandwidth received and/or transmitted by the first type of reduced capability UE.

In an embodiment, the bandwidth capability information is further configured to indicate at least one of: a third bandwidth processing capability of the first type of reduced capability UE, a fourth bandwidth processing capability of the first type of reduced capability UE, or a fifth bandwidth processing capability of the first type of reduced capability UE.

The third bandwidth processing capability is less than or equal to the first bandwidth threshold, or the third bandwidth processing capability is greater than the first bandwidth threshold and less than or equal to a third bandwidth threshold; and the third bandwidth processing capability is configured to determine a maximum bandwidth allocated, by the first type of reduced capability UE, to a control channel.

The fourth bandwidth processing capability is less than or equal to the first bandwidth threshold, or the fourth bandwidth processing capability is greater than the first bandwidth threshold and less than or equal to the third bandwidth threshold; and the fourth bandwidth processing capability is configured to determine a maximum bandwidth allocated, by the first type of reduced capability UE, to a reference signal.

**The** fifth bandwidth processing capability is less than or equal to the first bandwidth threshold, or the fifth bandwidth processing capability is greater than the first bandwidth threshold and less than or equal to the third bandwidth threshold; and the fifth bandwidth processing capability is configured to determine a maximum bandwidth allocated, by the first type of reduced capability UE, to a synchronization signal and physical broadcast channel (PBCH) block (SSB).

**In** an embodiment, the third bandwidth threshold is greater than or equal to the first bandwidth threshold.

**In** an embodiment, the third bandwidth threshold is equal to or less than the second bandwidth threshold.

In an embodiment, the second transmitting and receiving module 210 is further configured to receive resource configuration information from the base station, where the resource configuration information is configured to indicate a transmission resource for the first type of reduced capability UE, and the resource configuration information is determined by the base station based on the bandwidth capability information; and/or the second transmitting and receiving module 210 is further configured to obtain predefined resource configuration information.

In an embodiment, the resource configuration information is configured to indicate at least one of: a frequency spectrum resource of the data channel, a frequency spectrum resource of a control channel, a frequency spectrum resource of a reference signal, or a frequency spectrum resource of an SSB.

A maximum bandwidth of the frequency spectrum resource of the data channel is less than or equal to the first bandwidth threshold.

A maximum bandwidth of the frequency spectrum resource of the control channel is less than or equal to the first bandwidth threshold, or the maximum bandwidth of the frequency spectrum resource of the control channel is greater than the first bandwidth threshold and less than or equal to a third bandwidth threshold.

A maximum bandwidth of the frequency spectrum resource of the reference signal is less than or equal to the first bandwidth threshold, or the maximum bandwidth of the frequency spectrum resource of the reference signal is greater than the first bandwidth threshold and less than or equal to the third bandwidth threshold.

A maximum bandwidth of the frequency spectrum resource of the SSB is less than or equal to the first bandwidth threshold, or the maximum bandwidth of the frequency spectrum resource of the SSB is greater than the first bandwidth threshold and less than or equal to the third bandwidth threshold.

In an embodiment, at least one of: the frequency spectrum resource of the data channel, the frequency spectrum resource of the control channel, the frequency spectrum resource of the reference signal, or the frequency spectrum resource of the SSB, as indicated by the resource configuration information, occupies a span of bandwidth in a frequency domain at the same moment that is less than or equal to the third bandwidth threshold.

In an embodiment, the resource configuration information is configured to indicate a bandwidth part (BWP) configured to the first type of reduced capability UE, and the BWP has a bandwidth less than or equal to a third bandwidth threshold.

In an embodiment, the first transmitting and receiving module 110, the processing module 120, and the second transmitting and receiving module 210, etc. may be connected by one or more central processing units (CPU), graphics processing units (GPU), baseband processors (BP), application specific integrated circuits (ASIC), digital signal processors (DSP), programmable logic devices (PLD), complex programmable logic devices (CPLD), field-programmable gate array (FPGA), general-purpose processors, controllers, micro controller unit (MCU), microprocessors, or other electronic components to perform the foregoing methods.

FIG. 11 is a block diagram illustrating a device for transmitting information according to an embodiment of the present disclosure. For example, the device 3000 can be a mobile phone, a computer, a digital broadcast terminal, a message transmitting and receiving device, a gaming console, a tablet device, a medical device, a fitness device, a personal digital assistant, and the like.

Referring to FIG 11, the device 3000 can include one or more of the following components: a processing component 3002, a memory 3004, a power supply component 3006, a multimedia component 3008, an audio component 3010, an input/output (I/O) interface 3012, a sensor component 3014, and a communication component 3016.

The processing component 3002 usually controls overall operations of the device 3000, such as operations related to display, a telephone call, data communication, a camera operation and a record operation. The processing component 3002 may include one or more processors 3020 to execute instructions to complete all or a part of the steps of the above methods. Further, the processing component 3002 may include one or more modules to facilitate interaction between the processing component 3002 and another component. For example, the processing component 3002 may include a multimedia module to facilitate the interaction between the multimedia component 3008 and the processing component 3002.

The memory 3004 is configured to store different types of data to support the operations of the device 3000. Examples of such data include instructions, contact data, phone book data, messages, pictures, videos, and so on for any application or method that operates on the device 3000. The memory 3004 may be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or a CD.

The power supply component 3006 provides power for different components of the device 3000. The power supply component 3006 may include a power management system, one or more power sources, and other components associated with generating, managing and distributing power for the device 3000.

The multimedia component 3008 includes a screen providing an output interface between the device 3000 and the user. In some embodiments, the screen may include a liquid crystal display (LCD) and/or a touch panel (TP). If the screen includes a touch panel, the screen may be implemented as a touch screen for receiving an input signal from a user. The touch panel may include one or more touch sensors for sensing a touch, a slide and a gesture on the touch panel. The touch sensor may not only sense the boundary of a touch or slide operation but also detect duration and pressure relating to the touch or slide operation. In some examples, the multimedia component 3008 may include a front camera and/or a rear camera. When the device 3000 is in an operation mode, such as a shooting mode or a video mode, the front camera and/or the rear camera can receive external multimedia data. Each of the front camera and the rear camera may be a fixed optical lens system or be of a focal length and a capability of an optical zoom.

The audio component 3010 is configured to output and/or input an audio signal. For example, the audio component 3010 may include a microphone (MIC). When the device 3000 is in an operating mode, such as a call mode, a recording mode and a speech recognition mode, the microphone is configured to receive an external audio signal. The received audio signal may be further stored in the memory 3004 or sent via the communication component 3016. In some embodiments, the audio component 3010 also includes a speaker for outputting an audio signal.

The I/O interface 3012 provides an interface between the processing component 3002 and a peripheral interface module which may be a keyboard, a click wheel, a button, or the like. Such buttons may include but not limited to: a home button, a volume button, a start button and a lock button.

The sensor component 3014 includes one or more sensors for providing state assessments in different aspects for the device 3000. For example, the sensor component 3014 can detect an open/closed state of the device 3000, a relative positioning of components, such as the display and keypad of the device 3000, and sensor component 3014 can also detect a change in position of the device 3000 or a component of the device 3000, the presence or absence of user contact with the device 3000, orientation or acceleration/deceleration of the device 3000, and temperature change of the device 3000. The sensor component 3014 may include a proximity sensor configured to detect presence of a nearby object without any physical contact. The sensor component 3014 may also include an optical sensor, such as a CMOS or CCD image sensor used in an imaging application. In some examples, the sensor component 3014 may also include an acceleration sensor, a gyro sensor, a magnetic sensor, a pressure sensor, or a temperature sensor.

The communication component 3016 is configured to facilitate wired or wireless communication between the device 3000 and other devices. The device 3000 may access a wireless network based on a communication standard, such as WiFi, 2G, 3G, 4G, 5G, or 6G, or a combination thereof. In some embodiments, the communication component 3016 may receive a broadcast signal or broadcast-related information from an external broadcast management system via a broadcast channel. In some embodiments, the communication component 3016 may also include a Near Field Communication (NFC) module to facilitate short-range communications. For example, the NFC module may be implemented based on a radio frequency identification (RFID) technology, an infrared data association (IrDA) technology, an ultra wide band (UWB) technology, a Bluetooth (BT) technology, and other technologies.

In an example, the device 3000 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic elements, for executing the method in any one of the above examples.

In an example, a non-transitory computer readable storage medium including instructions, such as the memory 3004 including instructions, is also provided. The above instructions may be executed by the processor 3020 of the device 3000 to complete the above method. For example, the non-transitory computer-readable storage medium may be a ROM, a RAM, a CD-ROM, a magnetic tape, a floppy disc, an optical data storage device, and the like.

Other embodiments of the present disclosure will be readily apparent to those skilled in the art after considering the specification and practicing the contents disclosed herein. The present disclosure is intended to include any variations, uses and adaptive changes of the present disclosure. These variations, uses and adaptive changes follow the general principle of the present disclosure and include common knowledge or conventional technical means in the prior art not disclosed in the present disclosure. The specification and examples are to be regarded as illustrative only. The true scope and spirit of the present disclosure are pointed out by the following claims.

It is to be understood that the present disclosure is not limited to the precise construction described herein and shown in the drawings, and that various modifications and changes may be made without departing from the scope thereof. The scope of the present disclosure is to be limited only by the appended claims.

## Claims

1. An information transmission method, performed by a base station, and comprising:
receiving bandwidth capability information reported by a first type of reduced capability user equipment (UE), wherein the bandwidth capability information is configured to indicate at least a first bandwidth processing capability of the first type of reduced capability UE, the first bandwidth processing capability is less than or equal to a first bandwidth threshold, the first bandwidth threshold is less than a second bandwidth threshold supported by a second type of reduced capability UE, and the first bandwidth processing capability is configured to determine a maximum bandwidth allocated, by the first type of reduced capability UE, to a data channel.

2. The method of claim 1, wherein the bandwidth capability information is further configured to indicate a second bandwidth processing capability of the first type of reduced capability UE,
wherein the second bandwidth processing capability is less than or equal to a third bandwidth threshold, and the second bandwidth processing capability is configured to determine a maximum bandwidth received and/or transmitted by the first type of reduced capability UE.

3. The method of claim 2, wherein the bandwidth capability information is further configured to indicate at least one of:
a third bandwidth processing capability of the first type of reduced capability UE, wherein the third bandwidth processing capability is less than or equal to the first bandwidth threshold, or the third bandwidth processing capability is greater than the first bandwidth threshold and less than or equal to a third bandwidth threshold; and the third bandwidth processing capability is configured to determine a maximum bandwidth allocated, by the first type of reduced capability UE, to a control channel;
a fourth bandwidth processing capability of the first type of reduced capability UE, wherein the fourth bandwidth processing capability is less than or equal to the first bandwidth threshold, or the fourth bandwidth processing capability is greater than the first bandwidth threshold and less than or equal to the third bandwidth threshold; and the fourth bandwidth processing capability is configured to determine a maximum bandwidth allocated, by the first type of reduced capability UE, to a reference signal; or
a fifth bandwidth processing capability of the first type of reduced capability UE, wherein the fifth bandwidth processing capability is less than or equal to the first bandwidth threshold, or the fifth bandwidth processing capability is greater than the first bandwidth threshold and less than or equal to the third bandwidth threshold; and the fifth bandwidth processing capability is configured to determine a maximum bandwidth allocated, by the first type of reduced capability UE, to a synchronization signal and physical broadcast channel (PBCH) block (SSB).

4. The method of claim 2 or 3, wherein the third bandwidth threshold is greater than or equal to the first bandwidth threshold.

5. The method of claim 2 or 3, wherein the third bandwidth threshold is equal to or less than the second bandwidth threshold.

6. The method of any one of claims 1 to 3, further comprising:
configuring, based on the bandwidth capability information, a transmission resource for the first type of reduced capability UE; and
transmitting to the first type of reduced capability UE resource configuration information indicating the transmission resource.

7. The method of claim 6, wherein the resource configuration information is configured to indicate at least one of:
a frequency spectrum resource of the data channel, wherein a maximum bandwidth of the frequency spectrum resource of the data channel is less than or equal to the first bandwidth threshold;
a frequency spectrum resource of a control channel, wherein a maximum bandwidth of the frequency spectrum resource of the control channel is less than or equal to the first bandwidth threshold, or the maximum bandwidth of the frequency spectrum resource of the control channel is greater than the first bandwidth threshold and less than or equal to a third bandwidth threshold;
a frequency spectrum resource of a reference signal, wherein a maximum bandwidth of the frequency spectrum resource of the reference signal is less than or equal to the first bandwidth threshold, or the maximum bandwidth of the frequency spectrum resource of the reference signal is greater than the first bandwidth threshold and less than or equal to the third bandwidth threshold; or
a frequency spectrum resource of a synchronization signal and physical broadcast channel (PBCH) block (SSB), wherein a maximum bandwidth of the frequency spectrum resource of the SSB is less than or equal to the first bandwidth threshold, or the maximum bandwidth of the frequency spectrum resource of the SSB is greater than the first bandwidth threshold and less than or equal to the third bandwidth threshold.

8. The method of claim 7, wherein at least one of: the frequency spectrum resource of the data channel, the frequency spectrum resource of the control channel, the frequency spectrum resource of the reference signal, or the frequency spectrum resource of the SSB, as indicated by the resource configuration information, occupies a span of bandwidth in a frequency domain at the same moment that is less than or equal to the third bandwidth threshold.

9. The method of claim 6, wherein the resource configuration information is configured to indicate a bandwidth part (BWP) configured to the first type of reduced capability UE,
wherein the BWP has a bandwidth less than or equal to a third bandwidth threshold.

10. An information transmission method, performed by a first type of reduced capability user equipment (UE), and comprising:
reporting bandwidth capability information to a base station, wherein the bandwidth capability information is configured to indicate at least a first bandwidth processing capability of the first type of reduced capability UE, the first bandwidth processing capability is less than or equal to a first bandwidth threshold, the first bandwidth threshold is less than a second bandwidth threshold supported by a second type of reduced capability UE, and the first bandwidth processing capability is configured to determine a maximum bandwidth allocated, by the first type of reduced capability UE, to a data channel.

11. The method of claim 10, wherein the bandwidth capability information is further configured to indicate a second bandwidth processing capability of the first type of reduced capability UE,
wherein the second bandwidth processing capability is less than or equal to a third bandwidth threshold, and the second bandwidth processing capability is configured to determine a maximum bandwidth received and/or transmitted by the first type of reduced capability UE.

12. The method of claim 11, wherein the bandwidth capability information is further configured to indicate at least one of:
a third bandwidth processing capability of the first type of reduced capability UE, wherein the third bandwidth processing capability is less than or equal to the first bandwidth threshold, or the third bandwidth processing capability is greater than the first bandwidth threshold and less than or equal to a third bandwidth threshold; and the third bandwidth processing capability is configured to determine a maximum bandwidth allocated, by the first type of reduced capability UE, to a control channel;
a fourth bandwidth processing capability of the first type of reduced capability UE, wherein the fourth bandwidth processing capability is less than or equal to the first bandwidth threshold, or the fourth bandwidth processing capability is greater than the first bandwidth threshold and less than or equal to the third bandwidth threshold; and the fourth bandwidth processing capability is configured to determine a maximum bandwidth allocated, by the first type of reduced capability UE, to a reference signal; or
a fifth bandwidth processing capability of the first type of reduced capability UE, wherein the fifth bandwidth processing capability is less than or equal to the first bandwidth threshold, or the fifth bandwidth processing capability is greater than the first bandwidth threshold and less than or equal to the third bandwidth threshold; and the fifth bandwidth processing capability is configured to determine a maximum bandwidth allocated, by the first type of reduced capability UE, to a synchronization signal and physical broadcast channel (PBCH) block (SSB).

13. The method of claim 11 or 12, wherein the third bandwidth threshold is greater than or equal to the first bandwidth threshold.

14. The method of claim 11 or 12, wherein the third bandwidth threshold is equal to or less than the second bandwidth threshold.

15. The method of any one of claims 10 to 12, further comprising at least one:
receiving resource configuration information from the base station, wherein the resource configuration information is configured to indicate a transmission resource for the first type of reduced capability UE, and the resource configuration information is determined by the base station based on the bandwidth capability information; or
obtaining predefined resource configuration information.

16. The method of claim 15, wherein the resource configuration information is configured to indicate at least one of:
a frequency spectrum resource of the data channel, wherein a maximum bandwidth of the frequency spectrum resource of the data channel is less than or equal to the first bandwidth threshold;
a frequency spectrum resource of a control channel, wherein a maximum bandwidth of the frequency spectrum resource of the control channel is less than or equal to the first bandwidth threshold, or the maximum bandwidth of the frequency spectrum resource of the control channel is greater than the first bandwidth threshold and less than or equal to a third bandwidth threshold;
a frequency spectrum resource of a reference signal, wherein a maximum bandwidth of the frequency spectrum resource of the reference signal is less than or equal to the first bandwidth threshold, or the maximum bandwidth of the frequency spectrum resource of the reference signal is greater than the first bandwidth threshold and less than or equal to the third bandwidth threshold; or
a frequency spectrum resource of a synchronization signal and physical broadcast channel (PBCH) block (SSB), wherein a maximum bandwidth of the frequency spectrum resource of the SSB is less than or equal to the first bandwidth threshold, or the maximum bandwidth of the frequency spectrum resource of the SSB is greater than the first bandwidth threshold and less than or equal to the third bandwidth threshold.

17. The method of claim 16, wherein at least one of: the frequency spectrum resource of the data channel, the frequency spectrum resource of the control channel, the frequency spectrum resource of the reference signal, or the frequency spectrum resource of the SSB, as indicated by the resource configuration information, occupies a span of bandwidth in a frequency domain at the same moment that is less than or equal to the third bandwidth threshold.

18. The method of claim 15, wherein the resource configuration information is configured to indicate a bandwidth part (BWP) configured to the first type of reduced capability UE,
wherein the BWP has a bandwidth less than or equal to a third bandwidth threshold.

19. An information transmission apparatus, comprising:
a first transmitting and receiving module, configured to receive bandwidth capability information reported by a first type of reduced capability user equipment (UE), wherein the bandwidth capability information is configured to indicate at least a first bandwidth processing capability of the first type of reduced capability UE, the first bandwidth processing capability is less than or equal to a first bandwidth threshold, the first bandwidth threshold is less than a second bandwidth threshold supported by a second type of reduced capability UE, and the first bandwidth processing capability is configured to determine a maximum bandwidth allocated, by the first type of reduced capability UE, to a data channel.

20. An information transmission apparatus, comprising:
a second transmitting and receiving module, configured to report bandwidth capability information to a base station, wherein the bandwidth capability information is configured to indicate at least a first bandwidth processing capability of the first type of reduced capability UE, the first bandwidth processing capability is less than or equal to a first bandwidth threshold, the first bandwidth threshold is less than a second bandwidth threshold supported by a second type of reduced capability UE, and the first bandwidth processing capability is configured to determine a maximum bandwidth allocated, by the first type of reduced capability UE, to a data channel.

21. A communication device, comprising: a processor; and a memory storing programs executable by the processor, wherein the programs, when executed by the processor, cause the processor to perform the information transmission method of any one of claims 1 to 9, or claims 10 to 18.

22. A computer-readable storage medium, storing executable programs thereon, wherein the executable programs, when executed by a processor, cause the processor to perform the information transmission method of any one of claims 1 to 9, or claims 10 to 18.
